# EUROPEAN PATENT APPLICATION

(11) **EP 4 783 741 A1**
(43) Date of publication of application: **29.07.2026**
(21) Application number: 24868741.0
(22) Date of filing: 20.09.2024
(51) Int. Cl.: H05B 6/12, H05B 6/06, F24C 15/10, F24C 7/08, G01K 1/14, F24C 15/34, F24C 3/12

(54) **COOKING APPARATUS**

(30) Priority: 21.09.2023 KR 20230126657; 21.09.2023 KR 20230126658; 26.09.2023 KR 20230129155; 22.02.2024 KR 20240026117; 10.09.2024 KR 20240123126
(71) Applicant: LG Electronics Inc., Yeongdeungpo-gu Seoul 07336 (KR)
(72) Inventor: KIM, Eui Sung, Seoul 08592 (KR); MOON, Hyunwook, Seoul 08592 (KR); PARK, Kyungho, Seoul 08592 (KR)
(74) Representative: Vossius & Partner Patentanwälte Rechtsanwälte mbB
(86) International application number: PCT/KR2024/014237
(87) International publication number: WO 2025/063765

(57) **Abstract**

The present invention relates to a cooking apparatus in which a signal processing unit capable of performing signal processing in batches on output signals of a plurality of temperature sensors formed integrally on a coil circuit board module and transmitting the processed signals to a main circuit board module is configured to be integrally provided in a temperature sensing circuit rather than in the main circuit board, thereby being capable of simplifying the configuration of the main circuit board module.

## Description

### [Technical Field]

The present invention relates to a cooking apparatus, and more particularly, to a cooking apparatus in which a signal processing unit capable of performing signal processing in batches on output signals of a plurality of temperature sensors formed integrally on a coil circuit board module and transmitting the processed signals to a main circuit board module is configured to be integrally provided in a temperature sensing circuit rather than in the main circuit board, thereby being capable of simplifying the configuration of the main circuit board module.

### [Background Art]

A cooking apparatus is a type of home apparatus for cooking food and is installed in a kitchen space to cook the food based on an intention of a user. Such cooking apparatus may be classified in various ways depending on a heat source used, a shape, and a type of fuel.

When classifying the cooking apparatus based on a type of cooking the food, the cooking apparatus may be classified into an open cooking apparatus and a closed cooking apparatus depending on a type of a space where the food is placed. Examples of the closed cooking apparatus include an oven, a microwave, and the like, while examples of the open cooking apparatus include a cooktop, a hob, and the like.

Among the open cooking apparatuss, the cooktop may be provided to be capable of heating food contained in a cooking container through at least one or more burners.

This cooktop may be provided in a form having a burner using electricity, or may be provided in a form having a burner using gas.

Additionally, the cooktop may be implemented as a standalone unit, or in the form of an oven range including an oven underneath the cooktop.

As an example of a cooktop having a burner using electricity, there is an induction heating cooking apparatus.

The induction heating cooking apparatus is a cooking apparatus that performs a cooking function in an induction heating method. In the induction heating cooking apparatus, when high-frequency power is applied to a working coil, a magnetic field can be formed around the working coil.

By the generated magnetic field, eddy current can be generated in the cooking container made of a magnetic material, and food can be cooked by the cooking container that generates heat by acting as a resistance to the eddy current.

This induction heating cooking apparatus does not require combustion of gas and therefore does not produce combustion exhaust gases. Furthermore, by allowing the container itself to generate heat immediately, the induction heating cooking apparatus can minimize the transfer process through heat radiation or conduction, thus being capable of heating the food at a high speed.

A conventional induction heating type cooktop is configured to form a individual burner by twisting a plurality of Litz wires to form a working coil and winding the working coil spirally a plurality of times to have a multi-layer structure.

In this case, each burner necessarily needs to be provided with a coil frame to maintain and support the winding shape of the working coil.

Therefore, the vertical size of the individual burner, which is the sum of the vertical size of the working coil wound in a multi-layer structure and the vertical size of the coil frame, inevitably accounts for a considerably large proportion with respect to the vertical size of the entire cooktop.

Due to this limitation in the size of the individual burner constituting the cooktop, conventional cooktops inevitably had a limitation in increasing the output of the individual burner.

Additionally, in the case of constructing a cooktop with a plurality of burners, conventional cooktops had spatial limitations in that there is very little space for installing other components or parts, and therefore the total number of burners that can be installed on the cooktop was inevitably very limited.

As an alternative to the Litz wire type working coil, a technology has been developed for a cooktop in which a burner is formed by forming the working coil in the form of a spiral multi-layer pattern on a printed circuit board. (Prior Document 001, Design and Optimization of Small Inductors on Extra-Thin PCB for Flexible Cooking Surfaces/IEEE TRANSACTIONS ON INDUSTRY APPLICATIONS, VOL. 53, NO. 1, JANUARY/FEBRUARY 2017)

The cooktop disclosed in Prior Document 001 can be configured to form a burner by forming a spirally wound working coil pattern in a single layer or in a plurality of layers on a single printed circuit board.

In this way, the cooktop disclosed in Prior Document 001 has advantages in that the size of the cooktop in the up and down directions can be significantly reduced compared to a conventional cooktop since the working coil patterns forming the burner are integrally formed on a single printed circuit board, thereby improving the space utilization in the up and down directions, and in that the number of burners can be significantly increased compared to a conventional cooktop, thereby improving the horizontal direction space utilization.

### [Disclosure]

### [Technical Problem]

The cooktop disclosed in the above-described Prior Document 001 has a problem in that since a temperature sensor for sensing the temperature of the container or the temperature of the top plate for the container to be seated on is not provided on the printed circuit board on which the working coil pattern is formed, the temperature of the container or the top plate cannot be effectively sensed.

Additionally, the cooktop disclosed in Prior Document 001 has a problem in that if the temperature sensor is to be disposed at a position other than the printed circuit board on which the working coil pattern is formed, an additional space for the installation of the temperature sensor needs to be secured between the printed circuit board and the top plate.

The present invention has been conceived to solve such problems of the prior art, and a first purpose of the present invention is to provide a cooking apparatus, in which the configuration is made such that a temperature sensing circuit including a temperature sensor for detecting the temperature of a top plate is integrally provided on a coil circuit board module on which a working coil pattern is formed, thereby being capable of preventing the deterioration of space utilization caused by the addition of the temperature sensor, and in which the temperature sensing circuit is formed integrally on the coil circuit board module, thereby being capable of minimizing the manufacturing cost and manufacturing time.

Also, the second purpose of the present invention is to provide a cooking apparatus, in which a signal processing unit capable of performing signal processing in batches on output signals of a plurality of temperature sensors formed integrally on a coil circuit board module and transmitting the processed signals to a main circuit board module is configured to be integrally provided in a temperature sensing circuit rather than in the main circuit board, thereby being capable of simplifying the configuration of the main circuit board module.

Additionally, the third purpose of the present invention is to provide a cooking apparatus, in which, by disposing a multiplexer, a signal amplification element, a signal conversion element, a pattern electrically connecting them, and the like, which constitute the signal processing unit, in a dummy region where no other pattern is formed, it is possible to improve the space availability for the dummy region, increase rigidity for the dummy region, and reduce the proportion of insulating material, thereby being capable of reducing the manufacturing cost.

The purposes of the present invention are not limited to the purposes mentioned above, and other purposes and advantages of the present invention which are not mentioned can be appreciated from the following description, and will be more clearly appreciated by the embodiments of the present invention. Furthermore, it is readily understood that the objects and advantages of the present invention can be achieved by the means set forth in the claims and combinations thereof.

### [Technical Solution]

A cooking apparatus according to the present invention includes a top plate for a container to be seated on; and a coil circuit board module disposed under the top plate, and having a working coil pattern causing the container to emit heat by generating a magnetic field when high-frequency power is applied thereto, and is characterized in that the coil circuit board module includes a temperature sensing circuit sensing a temperature of the top plate, and the temperature sensing circuit is formed integrally in the coil circuit board module.

Also, the temperature sensing circuit may include a plurality of temperature sensors mounted on the coil circuit board module.

Also, the plurality of temperature sensors may be each mounted on an upper surface of the coil circuit board module facing the top plate.

Also, the temperature sensing circuit may further include a multiplexer electrically connected to the plurality of temperature sensors and selecting and outputting an output signal of any one temperature sensor of the plurality of temperature sensors.

Also, the multiplexer may be mounted on an upper surface or a lower surface of the coil circuit board module.

Also, the multiplexer may be disposed in a position where the multiplexer does not overlap the working coil pattern based on up and down directions.

Also, the temperature sensing circuit may further include a pull-up element or a pull-down element connected to an output terminal of the multiplexer.

Also, the pull-up element or the pull-down element may be integrally provided in the multiplexer.

Also, the temperature sensing circuit may further include a microcomputer connected to an output terminal of the multiplexer and converting the selected output signal of the temperature sensor.

Also, the selected output signal of the temperature sensor may become a resistance-based data signal determined according to the temperature of the top plate, and the microcomputer may convert the resistance-based data into a temperature-based data signal.

Also, the microcomputer may be mounted on an upper surface or a lower surface of the coil circuit board module.

Also, the microcomputer may be disposed in a position where the microcomputer does not overlap the working coil pattern based on up and down directions.

Also, the temperature sensing circuit may further include a signal amplification element connected to the output terminal of the multiplexer.

Also, the signal amplification element may be integrally provided in the microcomputer.

Also, the coil circuit board module may further include a container sensing circuit sensing whether the container is seated, and the container sensing circuit may be formed integrally in the coil circuit board module.

Also, the container sensing circuit may include a sensing coil pattern formed to be wound spirally so as to sense whether the container is seated, and the temperature sensor may be disposed on the coil circuit board module in a state where the temperature sensor is surrounded by the sensing coil pattern when viewed from the top plate.

Also, it may further include a main circuit board module determining whether to supply high-frequency power to the working coil pattern, and the coil circuit board module may include a low-power connector connecting the temperature sensing circuit and the container sensing circuit to the main circuit board module side in an integrating manner.

Also, the low-power connector may be fixed to an lower surface of the coil circuit board module.

### [Advantageous Effects]

The present invention has an effect in that the configuration is made such that a temperature sensing circuit including a temperature sensor for detecting the temperature of a top plate is integrally provided on a coil circuit board module on which a working coil pattern is formed, thereby being capable of preventing the deterioration of space utilization caused by the addition of the temperature sensor, and in which the temperature sensing circuit is formed integrally on the coil circuit board module, thereby being capable of minimizing the manufacturing cost and manufacturing time.

Also, the present invention has an effect in that a signal processing unit capable of performing signal processing in batches on output signals of a plurality of temperature sensors and transmitting the processed signals to a main circuit board module is configured to be provided in a temperature sensing circuit, thereby being capable of commonly use the coil circuit board module regardless of the specifications of the product to which it is applied, and thereby being capable of minimizing changes in the settings or circuit configuration of the main circuit board module depending on the product specifications, which can thus lead to the simplified configuration of the main circuit board module.

Additionally, the present invention has an effect in that, by disposing a multiplexer, a signal amplification element, a signal conversion element, a pattern electrically connecting them, and the like, which constitute the signal processing unit, in a dummy region where no other pattern is formed, it is possible to improve the space availability for the dummy region.

Also, the present invention has an effect in that, by disposing a multiplexer, a signal amplification element, a signal conversion element, a pattern electrically connecting them, and the like, which constitute the signal processing unit, in a dummy region where no other pattern is formed, it is possible to increase rigidity for the dummy region, and reduce the proportion of insulating material, thereby being capable of reducing the manufacturing cost.

In addition to the effects described above, specific effects of the present invention will be described below together with specific matters for practicing the invention.

### [Description of Drawings]

FIG. 1 is a front perspective view of a cooking apparatus according to an embodiment of the present invention.
FIG. 2 is a plan view of the cooking apparatus illustrated in FIG. 1.
FIG. 3 is a plan view of the cooking apparatus shown in FIG. 1, and is a view showing a lighting status of an indication line.
FIG. 4 is an exploded perspective view of the cooktop of the cooking apparatus illustrated in FIG. 1.
FIG. 5 is a partially enlarged view of FIG. 4.
FIG. 6 is a plan view of the cooktop illustrated in FIG. 4, and is a view of a part under a top plate when seen through it.
FIG. 7 is a schematic cross-sectional view for explaining the layered structure of the first coil circuit board module illustrated in FIG. 4.
FIG. 8 is a plan view of the first layer constituting the layered structure of the first coil circuit board module illustrated in FIG. 4, and FIG. 9 is a partial enlarged view of FIG. 8.
FIG. 10 is a plan view of the second layer constituting the layered structure of the first coil circuit board module illustrated in FIG. 4.
FIG. 11 is a partial enlarged view of FIG. 8, and is a view showing together the patterns formed in the first to twelfth layers.
FIG. 12 is a plan view of the third to seventh layers constituting the layered structure of the first coil circuit board module illustrated in FIG. 4.

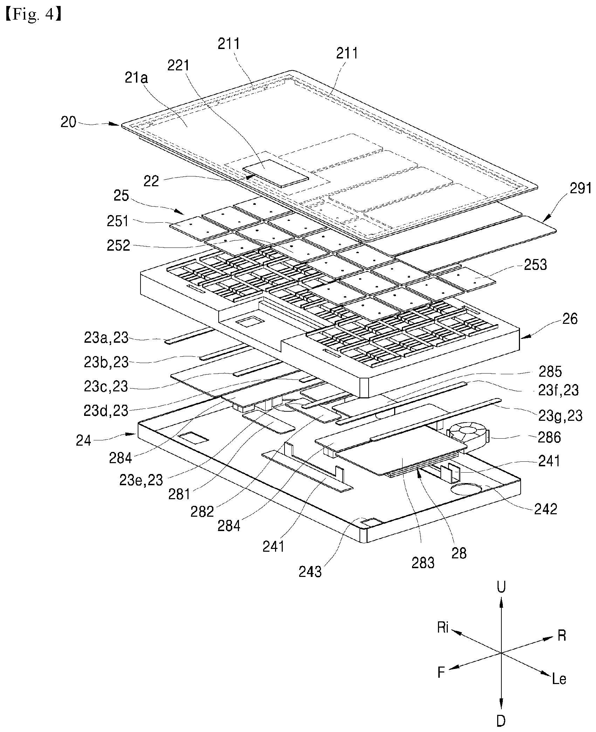

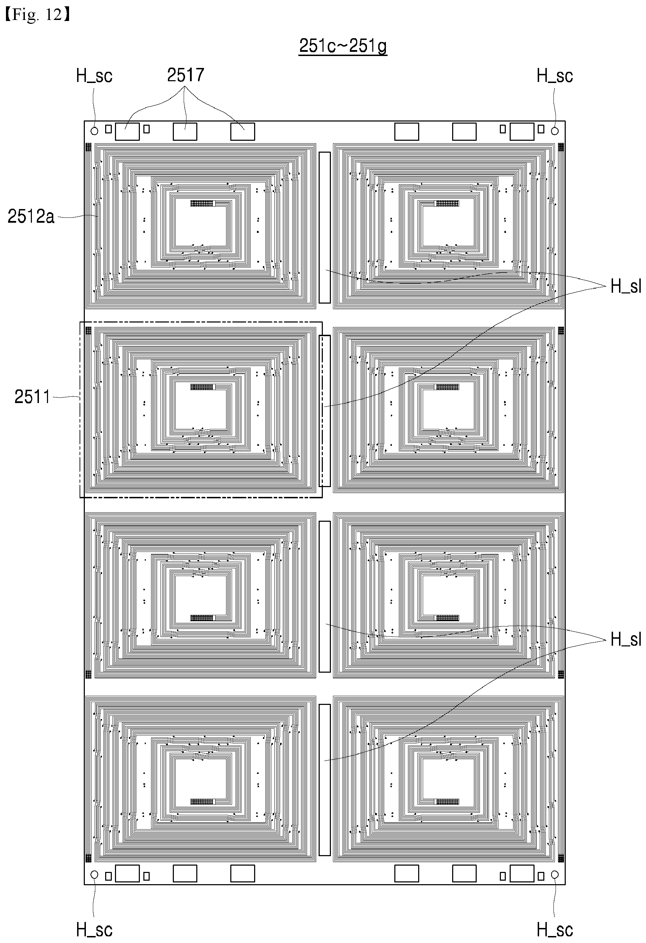

FIG. 12 is a plan view of the eighth to twelfth layers constituting the layered structure of the first coil circuit board module illustrated in FIG. 4.

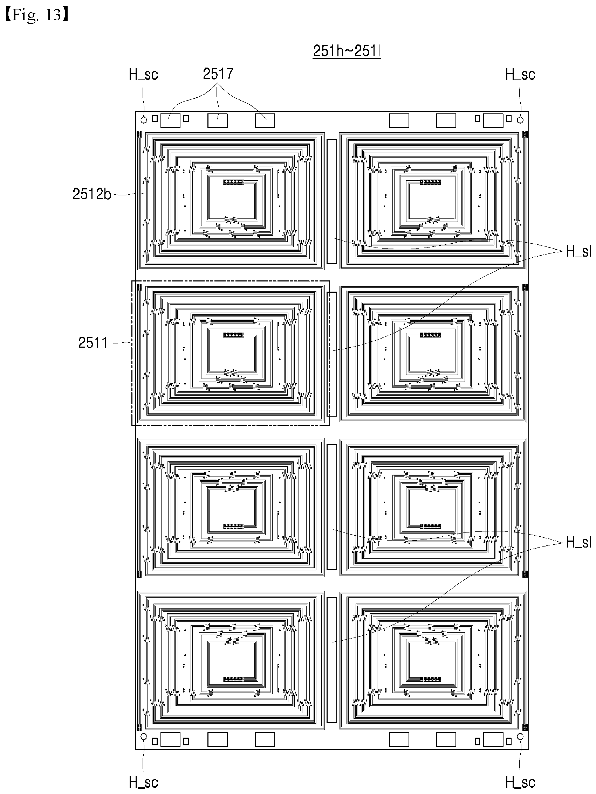

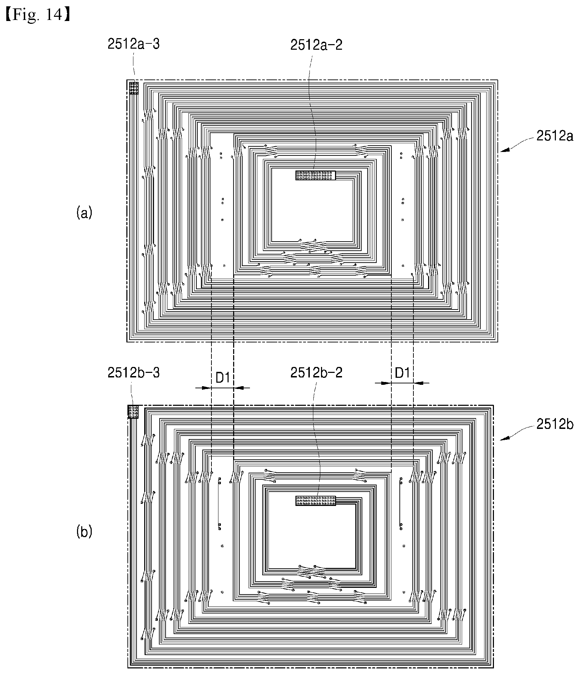

FIG. 14(a) is a plan view illustrating a portion of the first type pattern illustrated in FIG. 12, and FIG. 14(b) is a plan view illustrating a portion of the second type pattern illustrated in FIG. 13.

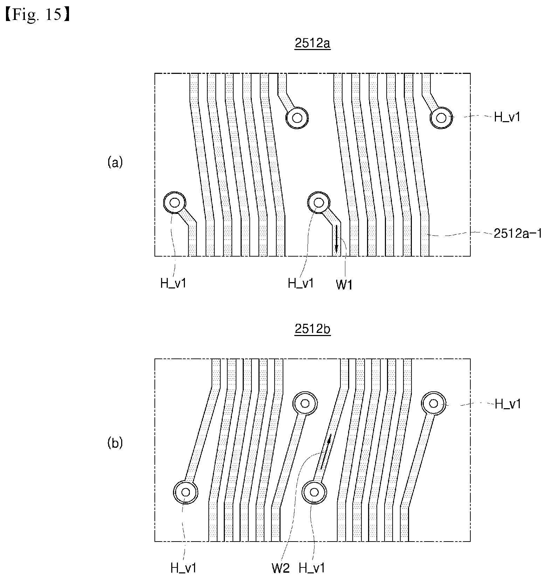

FIG. 15(a) is a partial enlarged view of FIG. 14(a), and FIG. 15(b) is a partial enlarged view of FIG. 14(b).

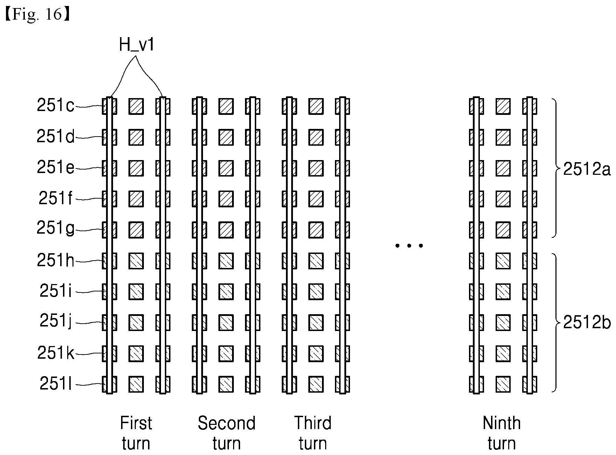

FIG. 16 is a schematic cross-sectional view for explaining a structure in which the first type pattern constituting the third to seventh layers shown in FIG. 4 and the second type pattern constituting the eighth to twelfth layers are collectively connected through working coil via holes.

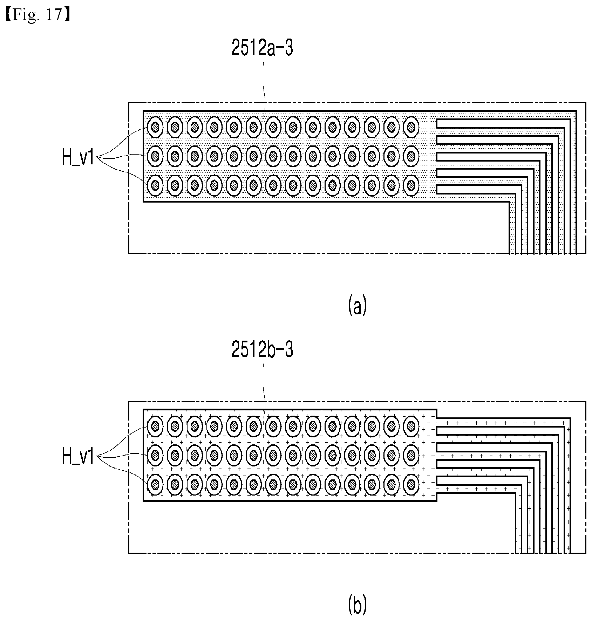

FIG. 17(a) is a partial enlarged view of FIG. 14(a), and FIG. 17(b) is a partial enlarged view of FIG. 14(b), which are partial enlarged views for explaining the common terminal of the first type pattern and the common terminal of the second type pattern, respectively.

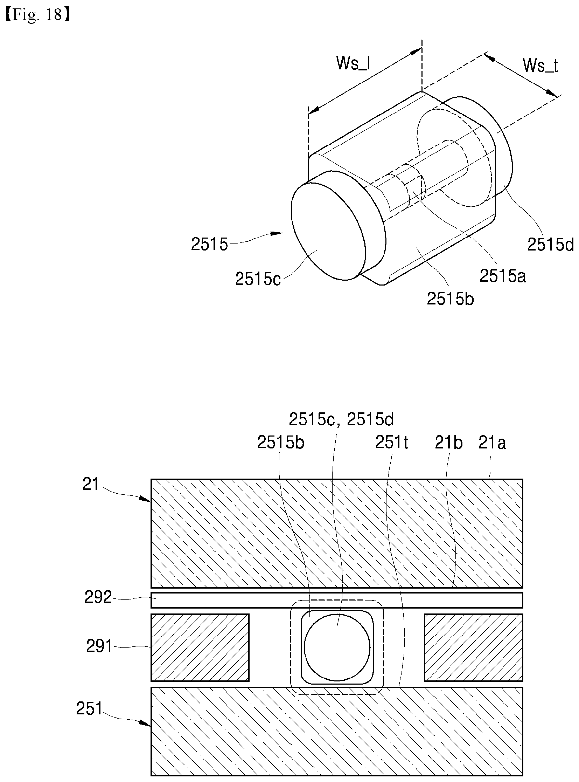

FIG. 18 is a schematic cross-sectional view illustrating a state in which a temperature sensor is mounted on a first coil circuit board module with the sensor body of the temperature sensor in contact with the upper surface of the first coil circuit board module.

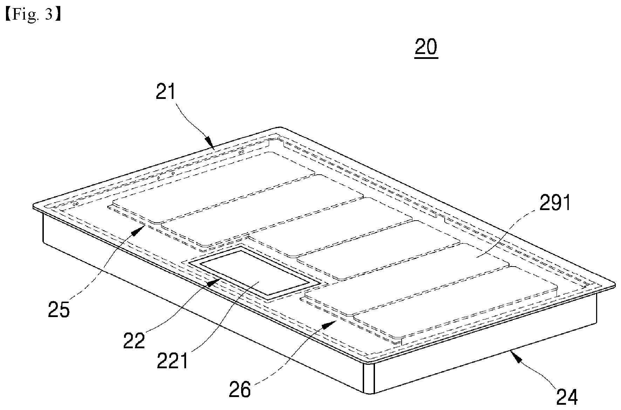

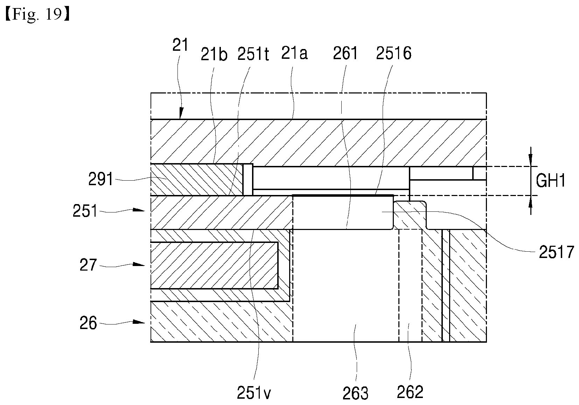

FIG. 19 is a partially enlarged view of the vertical direction cross-section of the cooktop shwon in FIG. 3.

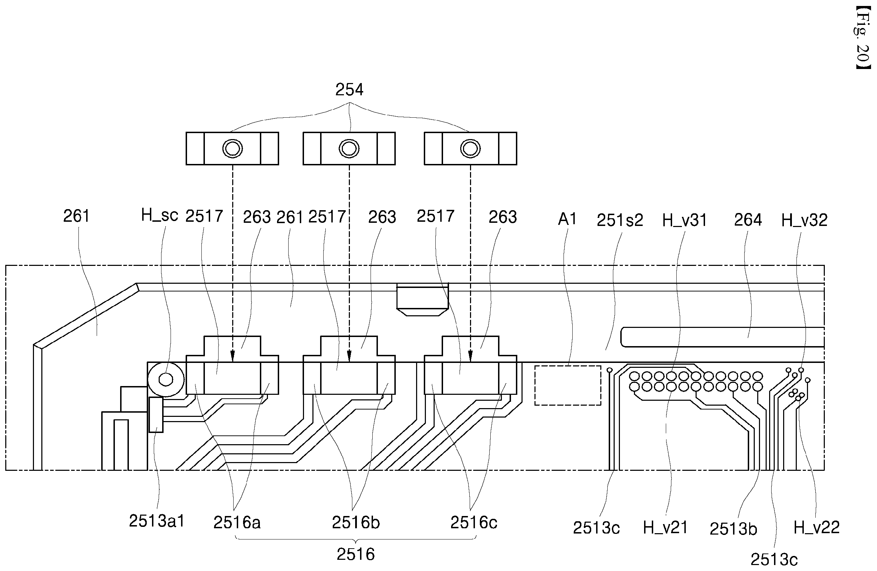

FIG. 20 is a plan view showing a state in which a first coil circuit board module is disposed on a substrate supporter.

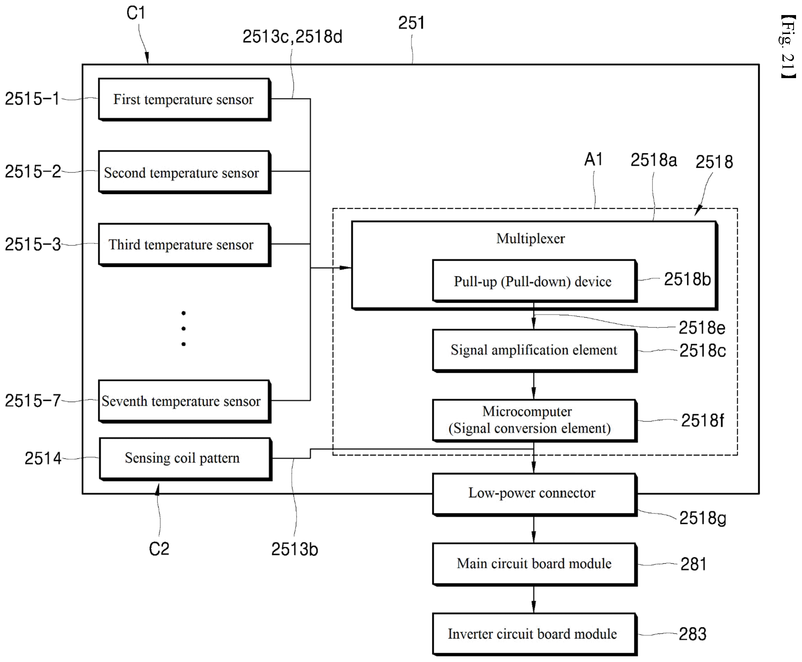

FIG. 21 is a functional block diagram schematically illustrating the connection relationship between a signal processing unit and a main circuit board module according to the present invention.

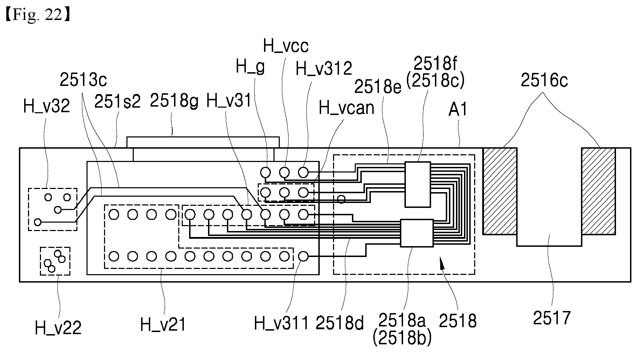

FIG. 22 is a partial enlarged view of FIG. 20, showing a structure in which a signal processing unit according to an embodiment of the present invention is disposed in an installation region.

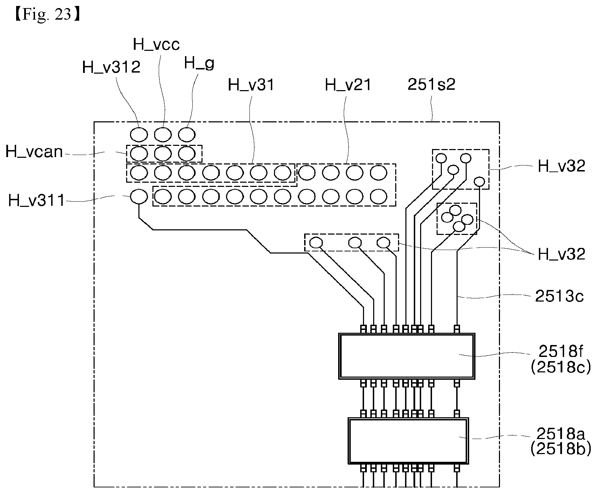

FIG. 23 is a partial enlarged view of FIG. 20, showing a structure in which a signal processing unit according to another embodiment of the present invention is disposed in the inside of a burner.

### [Best Mode]

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

Throughout the specification, unless specifically stated to the contrary, each element may be singular or plural.

Hereinafter, the phrase "any configuration is disposed in the upper side of (or in the lower side of) a component" or "on (or below) a component" may mean not only that any configuration is disposed in contact with the upper surface (or lower surface) of said component, but also that another configuration may be interposed between said component and any configuration disposed on (or below) said component.

Additionally, when a component is described as being "connected," "coupled," or "contacted" to another component, it should be understood that although the both components may be directly connected, coupled or contacted to each other, a third component may also be "interposed" between the both components, or the both components may be "connected," "coupled," or "contacted" to each other through a third component.

As used herein, singular expressions include plural expressions unless the context clearly dictates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Additionally, singular expressions used herein include plural expressions unless the context clearly indicates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Throughout the present document, "A and/or B" means A, B, or A and B, unless otherwise specified, and "C to D" means equal to or greater than C and equal to or smaller than D unless otherwise specified.

### [Overall structure of cooking apparatus]

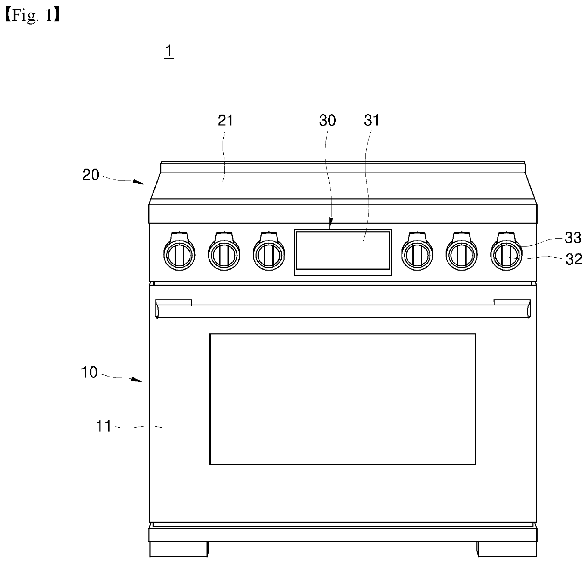

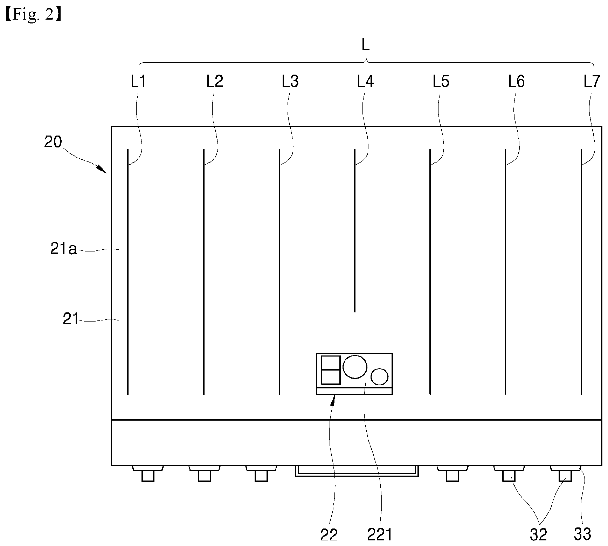

FIG. 1 is a perspective view illustrating a cooking apparatus 1 according to an embodiment of the present invention, and FIG. 2 is a plan view of a cooktop 20 constituting the cooking apparatus 1 shown in FIG. 1, when viewed from above.

Referring to FIGS. 1 to 3, the cooking apparatus 1 according to an embodiment of this invention may be constructed by including the cooktop 20 and an oven part 10 disposed under the cooktop 20.

As described above, the cooking apparatus 1 according to the embodiment of this invention may be an oven range type in which the cooktop 20 is disposed in the upper side and the oven part 10 is disposed in the lower side. However, the present invention is not limited to this, and may be configured as a cooking apparatus 1 in which the cooktop 20 is provided alone. Hereinafter, the description will be made based on a cooking apparatus 1 configured as an oven range type as illustrated by way of example.

The cooking apparatus 1 of the embodiment of the present invention can provide both the function of an oven, which is a closed cooking means, and the function of a cooktop, which is an open means, by being provided in the form of an oven range.

A cooking chamber may be formed inside the oven part 10, which is a closed cooking means. In the oven part 10, food can be cooked as the inside of the cooking chamber is heated.

To this end, although not shown, the oven part 10 may be provided with a heating part for heating the inside of the cooking chamber. The heating part may be a heating device using gas fuel or electricity.

The oven part 10 of the cooking apparatus 1 may be provided with a rotatable door 11 which selectively opens and closes the cooking chamber.

For example, the door 11 may be provided in the oven part 10 in the form of opening and closing the cooking chamber in a pull-down manner, in which its upper end is pivoted along the up and down directions around its lower end.

On the upper portion of the front surface of the cooking apparatus 1, a control panel 30 may be provided for manipulating the oven part 10 and the cooktop 20.

By being disposed in the front surface of the cooking apparatus 1, the control panel 30 can form a portion of the front exterior of the cooking apparatus 1.

This control panel 30 may be provided with a plurality of switches for controlling the operation of the cooking apparatus 1 and a display 31 displaying the operation status of the cooking apparatus 1.

Also, as shown, a plurality of knobs 32 may be further equipped on the control panel 30 of the cooking apparatus 1. That is, the control panel 30 provided in the upper portion of the front surface of the cooking apparatus 1 may be provided with a plurality of knobs 32 for adjusting the operation of the cooking apparatus 1 together with the display 31.

Each knob 32 may be provided in the form of being capable of rotational manipulation. These knobs 32 may be provided so as to be able to operate any one of the oven part 10 and the cooktop 20, or may be provided so as to be able to operate both the oven part 10 and the cooktop 20.

By the manipulation of the knobs provided as described above, any one of a plurality of preset cooking modes can be selected, or a heating temperature or a heating step can be selected.

Additionally, the control panel 30 of the cooking apparatus 1 according to the present embodiment may be further provided with a knob ring 33. The knob ring 33 may be disposed in the radial direction outer side of the knob 32. For example, the knob ring 33 may be provided in a ring shape surrounding the knob 32 in the radial direction outer side.

The knob ring 33 can perform a role of supporting the knob 32, and a role of finishing the outer appearance surrounding the knob 32 to improve the outer appearance quality of the cooking apparatus 1.

Additionally, the knob ring 33 of this embodiment may perform both a role as a timer manipulation switch, and a role of displaying the timer time and the heating power intensity.

The knob ring 33 may be installed to be independently rotatable with respect to the knob 32, and the timer time may be set through the rotational manipulation of the knob ring 33 installed as described above.

Meanwhile, as described above, the cooktop 20 may be disposed in the upper side of the oven part 10.

The cooktop 20 may perform a function of heating food or a container containing food, which is seated on the top surface of the cooktop 20.

To this end, the cooktop 20 may include a top plate 21, which forms the top surface of the cooktop 20, and on which a container containing food is seated.

Additionally, in the inside of the cooktop 20 under the top plate 21, a heating part may be provided for heating a container containing food.

The heating part may be constructed by including at least one or more burners. For example, the burner constituting the heating part may be provided in the form of including a working coil converting the supplied electrical force into magnetic force or a heating wire coil converting the supplied electrical force into thermal energy.

The cooktop 20 of the cooking apparatus 1 according to an embodiment of the present invention may be provided to be of an induction heating manner.

To this end, the burner of the cooktop 20 may constructed by including the working coil. The burner including the working coil like this can be operated by a high-frequency current generated and supplied by an inverter to generate a strong magnetic field.

The magnetic field generated in the burner including the working coil like this can generate eddy current in the container containing a metal component, and as the eddy current flows through the container, heat can be generated, which can heat the container, and by the heating of the container, the food contained in the container can be heated.

However, as in the usual construction, the working coil applied to the cooktop of the conventional induction heating manner was formed by twisting a plurality of electrically conductive wires to form a cable and winding the cable in a spiral shape.

However, as will be described later, the working coil constituting the cooktop 20 of the cooking apparatus 1 according to an embodiment of the present invention may be constructed with a plurality of patterns stacked spirally and formed on printed circuit boards.

As such, the working coil of the cooking apparatus 1 according to the present invention may be referred to as a working coil pattern since it has a structure formed and stacked on printed circuit boards.

The detailed configuration of the heating part including the working coil pattern will be described later with reference to FIG. 3 and the drawings after it.

### [Overall configuration of cooktop]

Hereinafter, the configuration of the cooktop 20 constituting the cooking apparatus 1 according to an embodiment of the present invention will be described with reference to FIGS. 3 to 5.

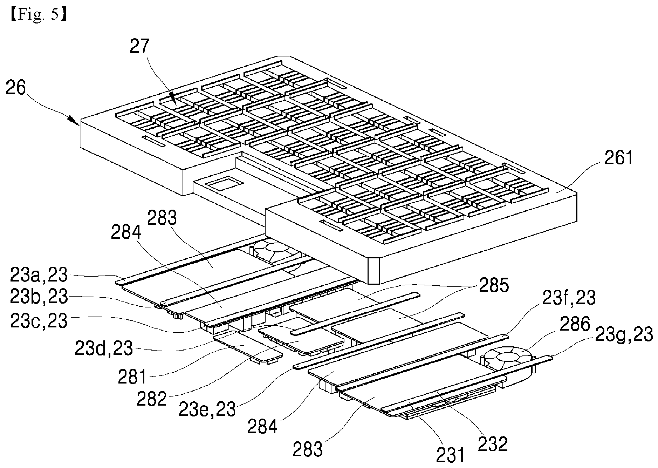

FIG. 3 is a plan view of the cooktop 20 with indication lines L in a lighting status, when viewed from above; FIG. 4 is an exploded perspective view of the cooktop 20 shown in FIG. 3; and FIG. 5 is a plan view seeing-through the inside of the cooktop 20 shown in FIG. 3.

First, referring to FIGS. 3 to 4, similar to the oven part 10 described above, the cooktop 20 according to this embodiment may include a control panel 22.

As shown, the control panel 22 of the cooktop 20 may be disposed in the top plate 21, and, more particularly, may be disposed in a position biased toward the front for user convenience.

This control panel 22 may be provided with various switches for adjusting the operation of the cooktop 20, a display panel 221 displaying the operation status of the cooktop 100, and the like.

As will be described later, when it is sensed through a sensing coil pattern 2514 constituting a container sensing circuit that the container is seated on the top surface 21a of the top plate 21, the display panel 221 of the control panel 22 provided in the cooktop 20 may display an icon corresponding to the container. For example, the icon may be provided in a form corresponding to the size and shape of the container, and may be disposed at a position in the display panel 221 corresponding to the position of the cooking apparatus 1.

By pressing the displayed icon, the user can select a container indicated by the icon, and perform the manipulation for controlling the operation of the cooking apparatus 1 with respect to the selected container.

For example, a user can select a container to be operated by pressing an icon, and then select a desired heating temperature for that container.

As described above, when the heating of the container through the manipulation of the control panel 22 is started, it may be displayed on the top plate 21 through the indication line L, as shown in FIG. 3, that the heating of the container has been started.

As shown in FIG. 3, a plurality of indication lines L may be provided in the top plate 21 of the cooktop 20.

The indication line L displays information related to the position of the container, the heating state of the container, the temperature, and the like on the top plate 21 in the form of a light emitting area, so that the corresponding information can be visually transmitted to the user.

FIG. 3 shows, by way of example, an embodiment in which a total of seven indication lines L are provided. These indication lines L may be conveniently named as the first to seventh indication lines L1, L2, L3, L4, L5, L6, L7 from the left side based on the top plate 21. The present invention is not limited to this, but, for convenience, the following description will be based on an embodiment in which a total of seven indication lines L are provided as shown.

These indication lines L may be light-emitting regions formed such that the width in the left and right directions is much smaller than the width in the front and rear directions, as shown.

The indication line L may be implemented by a light source module 23 disposed in the substrate supporter 26 to be described later under the top plate 21 so that each indication line L may be formed in the form of a light-emitting region.

The light source module 23 may be constructed by including a plurality of light source elements 231 generating visible light, and a light source circuit board 232 on which the plurality of light source elements 231 are mounted.

The plurality of light source elements 231 may be disposed so as to irradiate visible light toward the bottom surface of the top plate 21, and, as described below, the incident visible light may pass through a light-transmitting hole formed to penetrate the substrate supporter 26, a light-transmitting slit hole H _sl formed in each coil circuit board module constituting the heating part 25, and a gap formed between adjacent coil circuit board modules to be irradiated to the bottom surface of the top plate 21.

The light source module 23 may be constructed by including the plurality of light source elements 231 receiving power and generating visible light, and the light source circuit board 232 on which the plurality of light source elements 231 are mounted.

There is no limitation to applying means to the light source element 231 as long as it can receive power to generate a predetermined amount of visible light, and the means may include, for example, an LED element. The present invention will be described below based on, but not limited to, an example in which an LED element is applied as the light source element 231.

As illustrated, each light source circuit board 232 may extend linearly along the front and rear directions, corresponding to each indication line L extending linearly, and a plurality of light source elements 231 may be linearly arranged and disposed on each light source circuit board 232 so as to be spaced apart from one another at equal intervals or at unequal intervals along the front and rear directions.

Additionally, as described above, a plurality of light source modules 23 may be provided so as to irradiate visible light respectively and independently to the first indication line to the seventh indication line L1, L2, L3, L4, L5, L6, L7, and this plurality of light source modules 23 may be conveniently referred to as first to seventh light source modules 23a, 23b, 23c, 23d, 23e, 23f, 23g from the left side based on the top plate 21.

Corresponding to the first indication line to the seventh indication line L1, L2, L3, L4, L5, L6, L7, the first light source module to the seventh light source module 23a, 23b, 23c, 23d, 23e, 23f, 23g may be disposed to be spaced apart from each other at predetermined intervals along the left and right directions.

As described below, the distance between adjacent indication lines L and the distance between adjacent light source modules 23 may be formed to have a width equal to or slightly greater than the width in the left and right directions of the working coil pattern 2512 constituting the heating part 25.

Meanwhile, as illustrated, the cooktop 20 of the cooking apparatus 1 according to an embodiment of the present invention may include a bottom case 24 forming the front surface, the rear surface, both side surfaces, and the bottom surface of the exterior of the cooktop 20.

The bottom case 24 may be formed such that its top surface is entirely open, and the top plate 21 described above may be coupled to the open top surface.

As shown in FIG. 3, a fastening bracket 211 for coupling to the bottom case 24 may be provided on the bottom surface of the top plate 21 at a position corresponding to the upper end of the bottom case 24.

In this manner, as the top plate 21 is coupled to the upper side of the bottom case 24, the interior space surrounded by the top plate 21 and the bottom case 24 may accommodate a plurality of internal components constituting the cooktop 20.

Additionally, the bottom case 24 may be provided with a plurality of mount brackets 241, either integrally or separately.

The mount bracket 241 may be disposed in the interior space of the cooktop 20, and may be formed protrudingly upward from the bottom surface of the mount bracket 241 toward the electronic components.

This mount bracket 241 may support various electronic components 28 constituting the cooktop 20 from below, thereby limiting the sagging occurrence of components such as the main circuit board module 281, SMPS circuit board module 282, inverter circuit board module 283, resonant circuit board module 284, EMI filter module 285, and the like, and serving to support them.

Further, as shown in FIG. 4, an intake hole 242 and an exhaust hole 243, through which air for cooling various electronic components constituting the cooktop 20 can flow in and out, may be formed to penetrate the bottom surface 24a of the bottom case 24 along the up and down directions.

Meanwhile, the cooktop 20 of the cooking apparatus 1 according to an embodiment of the present invention may further include the heating part 25 having a working coil that heats a container by an induction heating method, and as described above, the working coil may be constructed with a plurality of working coil patterns 2512 formed by being stacked spirally on a printed circuit board.

Considering that a plurality of working coil patterns 2512 are stacked in a plurality of layered structures to form a burner, the printed circuit board formed by stacking working coil patterns 2512 may be referred to as a coil circuit board module.

Additionally, as described later, a plurality of working coil patterns 2512, a plurality of sensing coil patterns 2514, a plurality of lead patterns 2513, a plurality of dummy patterns, and the like, which constitute the coil circuit board module may be formed in a manner similar to a method of manufacturing a pattern of a general printed circuit board. Therefore, taking this point into consideration, the components referred to as patterns may be designated below as various terms such as conductive part, copper part, thin film part, printed part, and the like.

Additionally, similar to a general printed circuit board having a multi-layer structure, the coil circuit board module of the present invention may be provided with a working coil via hole H _v1, a sensing coil via hole H_v2, and a temperature sensor via hole H_v3, which are for electrically connecting patterns arranged on different layers to each other, and be provided with a plurality of dummy via holes which are not electrically connected to other patterns. Similarly to the conventional ones, the via holes may be formed in the communication holes formed in the coil circuit board module through physical, chemical deposition or coating methods, and thus may be designated as various terms such as conductive coating portion or conductive deposition portion.

Meanwhile, the coil circuit board module constituting the heating part 25 may be provided in plural in consideration of manufacturing convenience and efficiency.

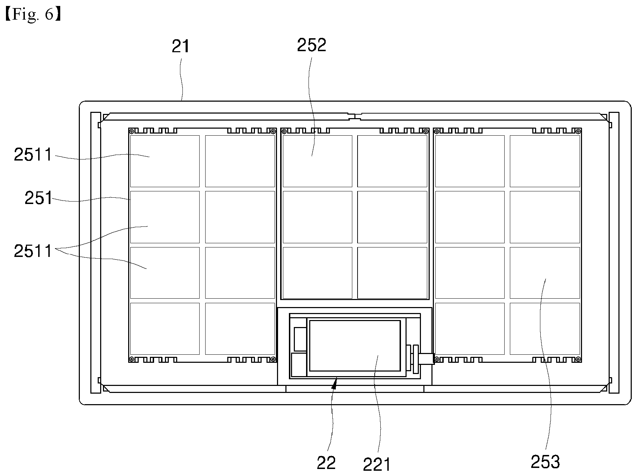

FIGS. 4 and 6 illustrate, by way of example, an embodiment of the cooktop 20 provided with the heating part 25 including a total of three coil circuit board modules. The present invention is not limited to this; however, the following description will be made based on an embodiment in which three coil circuit board modules are provided as illustrated by way of example.

The three coil circuit board modules 251, 252, 253 are hereinafter referred to as the first coil circuit board module 251, the second coil circuit board module 252, and the third coil circuit board module 253 in order from the left.

In each of the coil circuit board modules 251, 252, 253, a plurality of burners 2511 may be formed to heat a container.

In FIG. 6, an embodiment is shown, by way of example, in which the first coil circuit board module 251 and the third coil circuit board module 253 may each be provided with eight burners 2511, and the second coil circuit board module 252 may be provided with six burners 2511. As described below, the number of these burners 2511 and the size of the burners 2511 can be set differently depending on the size and output of the cooktop 20. Hereinafter, an example will be described based on an embodiment in which eight first coil circuit board module 251 and the third coil circuit board module 253 each have eight burners 2511, and the second coil circuit board module 252 has six burners.

Additionally, although FIG. 6 shows that the shape and size of each burner 2511 are the same, this is merely illustrative, and similarly, the shape and size of the burner 2511 may be set differently depending on the size and output of the cooktop 20.

In each of the coil circuit board modules 251, 252, 253, a working coil pattern 2512 forming this plurality of burners 2511 may be formed by being stacked in multiple layers.

Additionally, in each of the coil circuit board modules 251, 252, 253, a sensing coil pattern 2514 constituting the container sensing circuit may be stacked to form a means for sensing whether a container is seated at a specific location on the top surface 21a of the top plate 21.

Additionally, in each of the coil circuit board modules 251, 252, 253, a temperature sensing circuit for sensing each temperature of the top plate 21 may be integrally provided, and the temperature sensing circuit may include a temperature sensor 2515.

In this case, as described later, the working coil pattern 2512, the sensing coil pattern 2514 constituting the container sensing circuit, and the temperature sensor 2515 constituting the temperature sensing circuit may be provided in the form of being constructed integrally into each of the coil circuit board modules 251, 252, 253. Therefore, the heating part 25 of the cooktop 20 according to the present invention can have a significantly reduced width in the up and down directions compared to conventional heating ones, which allows the size of the cooktop 20 in the up and down directions to be reduced, resulting in a significant improvement in space utilization and significant simplication of the manufacturing process of the cooktop 20.

The working coil pattern 2512 and the sensing coil pattern 2514 may be extended spirally, and be provided in the form of being stacked in the up and down directions.

In this case, as described later, each of the first to third coil circuit board modules 251, 252, 253 may be formed, by way of example, in a form in which the working coil pattern 2512 is stacked in 10 to 12 layers and the sensing coil pattern 2514 is stacked in 2 layers, along the up and down directions. Therefore, each of the coil circuit board modules 251, 252, 253 can have a layered structure having 12 to 14 layers.

Meanwhile, each of the sensing coil pattern may be disposed in the inside of a region occupied by the working coil pattern 2512 forming the individual burner 2511, or may also be disposed in a region between a pair of adjacent working coil patterns 2512.

In this embodiment, in consideration of the efficiency and accuracy of container detection, a pair of sensing coil patterns 2514 may be disposed in the inside of the region occupied by each of the working coil patterns 2512, and a pair of sensing coil patterns 2514 may be disposed in the region between the adjacent pair of working coil patterns 2512.

Meanwhile, the temperature sensor 2515 constituting the temperature sensing circuit for sensing the temperature of the top plate 21 may be disposed at a position which is the center of each of the sensing coil patterns 2514.

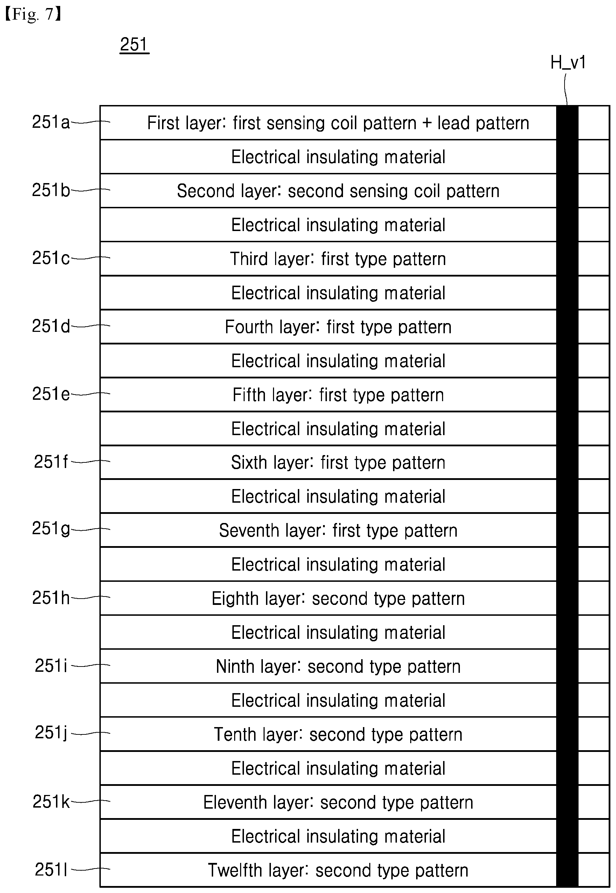

Details regarding the working coil pattern 2512, sensing coil pattern 2514, and temperature sensor 2515 constituting the first to third coil circuit board modules 251, 252, 253 will be described below with reference to FIG. 7 and the drawings after it.

Meanwhile, the cooktop 20 of the cooking apparatus 1 according to an embodiment of the present invention may further include a substrate supporter 26.

The substrate supporter 26, in which internal components disposed in the inside of the cooktop 20 are installed, plays a role to support them.

More specifically, as shown in FIGS. 4 and 5, the first to third coil circuit board modules 251, 252, 253 and the ferrite core module 27 may be seated in the upper side of the substrate supporter 26. Therefore, the substrate supporter 26 functions as a coil base on which a conventional working coil and a ferrite core are mounted.

Additionally, as shown in FIGS. 4 and 5, several electronic components 28 constituting the cooktop 20 may be installed in the lower side of the substrate supporter 26.

These electronic components 28 may include a main circuit board module 281, an SMPS circuit board module (switching mode power supply, 282), an inverter circuit board module 283, a resonance circuit board module 284, an EMI filter module 285, a blower fan module 286, a light source module 23, and the like.

These electric components 28 may be disposed in the space formed between the lower surface 24a of the bottom case 24 and the substrate supporter 26 as the bottom side of the substrate supporter 26.

For example, in order to effectively accommodate these electronic components 28, the substrate supporter 26 may have an inverted box shape configured so that the bottom surface facing the bottom case 24 is entirely open.

Therefore, the main circuit board module 281, the SMPS circuit board module (switching mode power supply, 282), the inverter circuit board module 283, the resonant circuit board module 284, the EMI filter module 28, the blower fan module 286, and the light source module 23 may be assembled to the substrate supporter 26 in a way that is stacked in an accommodation space formed in the inside of the substrate supporter 26.

In this way, as the first to third coil circuit board modules 251, 252, 253 are seated on the top surface 21a of the board supporter 26 and the electronic component 28 is seated on the bottom surface of the board supporter 26 as the interior of the board supporter 26, the wiring structure between the electronic components 28 and the wiring structure between the electronic component 28 and the first to third coil circuit board modules 251, 252, 253 can be significantly simplified and streamlined.

In particular, in the case of the conventional cooktop 20, almost all components need to be disassembled in the reverse order of the assembly process in order to repair the inverter circuit board that causes major failures and defects.

In contrast, the cooktop 20 of the cooking apparatus 1 according to an embodiment of the present invention is configured to easily access the electronic component 28 such as the inverter circuit board module 283 when only the bottom case 24 is disassembled in a state where the bottom case 24 is turned upside down, which thus leads to the effect of being able to easily repair or replace the electronic component 28 in which a defect has occurred.

In this regard, a process of assembling the cooktop 20 of the cooking apparatus 1 according to an embodiment of the present invention will be briefly described.

As shown in FIG. 5, first, a plurality of ferrite core modules 27 may be assembled on the top surface 261 of the substrate supporter 26.

The ferrite core module 27 according to an embodiment of the present invention may be constructed in a manner in which a plurality of ferrite cores are combined to be modularized. This takes into account the fact that crack defects or magnetic field losses may occur when a ferrite core constructed in a single body and formed to have a relatively large volume is applied.

By modularizing a plurality of ferrite cores to form the ferrite core module 27 and installing it on the substrate supporter 26, it is possible to effectively reduce the number of parts and simplify the assembly process.

For example, the ferrite core module 27 may be manufactured in an insert injection manner. In this way, by manufacturing the ferrite core module 27 in an insert injection manner, it is possible to omit a separate jig for fixing the single ferrite core part when assembling the cooktop 20 as in the prior art.

Additionally, by modularizing the ferrite core in this way to form a number of ferrite core modules 27, there is an advantage in that even if some ferrite cores are damaged, they can be repaired by simple replacement.

Meanwhile, when having completed the arrangement of a plurality of ferrite core modules 27 on the top surface 261 of the substrate supporter 26, the first to third coil circuit board modules 251, 252, 253 may be seated on the upper side of the ferrite core module 27.

Next, in a state where the first to third coil circuit board modules 251, 252, 253 are seated, the substrate supporter 26 may be turned upside down, and the assembly of the electronic component 28 may proceed.

As described above, several electric components 28 may be installed and assembled on the bottom surface of the substrate supporter 26. At this time, these electric components 28 may be installed and assembled in an upside-down state on the board supporter 26.

Meanwhile, the cooktop 20 of the cooking apparatus 1 according to an embodiment of the present invention may further include a thermal insulating material 291 disposed in the upper side of the first to third coil circuit board modules 251, 252, 253 and between the first to third coil circuit board modules 251, 252, 253 and the top plate 21.

The thermal insulating material 291 plays a role to minimize the transfer of heat generated from the container disposed on the top surface 21a of the top plate 21 and heated by the working coil pattern 2512 to the working coil pattern 2512.

In order to perform such an insulation function, the thermal insulating material 291 may be disposed in the form of a pad covering the first to third coil circuit board modules 251, 252, 253 as a whole.

Meanwhile, in the present embodiment, the thermal insulating material 291 may be divided into a plurality of pads.

In more detail, each of the thermal insulating materials 291 may be divided into a plurality of pads to have a width in the left and right directions corresponding to the width of the burner 2511 in the left and right directions formed in the first to third coil circuit board modules 251, 252, 253.

In this way, since the thermal insulating material 291 is disposed in a state of being divided into a plurality of pieces, a predetermined gap can be formed between adjacent thermal insulating materials 291, and visible light generated from the above-described light source module 23 can be irradiated through the predetermined gap to the bottom surface of the top plate 21, so that the above-described indication line L can be displayed on the top plate 21.

Meanwhile, the thermal insulating material 291 can additionally perform the role of electrically insulating between the working coil pattern 2512 or sensing coil pattern 2514 formed on the first to third coil circuit board modules 251, 252, 253 and the top plate 21.

In this case, the thermal insulating material 291 may be made of a material that simultaneously possesses both thermal insulating performance and electrical insulating performance.

Meanwhile, although not shown, in order to further supplement the electrical insulating performance of the thermal insulating material 291, an electrical insulating material may be added between the thermal insulating material 291 and the top plate 21 in the upper side of the thermal insulating material 291. For example, the electrical insulating material may be a mica sheet having a thickness less than that of the thermal insulating material 291 in the up and down directions.

### [Detailed Configuration of Coil Circuit Board Module]

Hereinafter, a detailed configuration of the coil circuit board module 251, 252, 253 of the cooktop 20 constituting the cooking apparatus 1 according to an embodiment of the present invention will be described with reference to FIGS. 7 to 16.

As described above, an embodiment of the present invention may be constructed by including the first to third coil circuit board modules 251, 252, 253.

In this case, the first to third coil circuit board modules 251, 252, 253 may be configured substantially the same except for the number of working coil patterns 2512 and the number of sensing coil patterns 2514 constituting the burner 2511.

Therefore, the following description will be made based on the first coil circuit board module 251, and unless otherwise stated, the contents described below can be applied almost identically to the second coil circuit board module 252 and the third coil circuit board module 253.

First, as described above, the first coil circuit board module 251 may be formed in a manner in which the working coil pattern 2512 forming a plurality of burners 2511 is stacked in multiple layers.

As illustrated in FIG. 7, for example, the first coil circuit board module 251 may be constructed by including working coil patterns 2512 arranged in a ten-layer structure, sensing coil patterns 2514 arranged in a two-layer structure, and an electrical insulating material disposed between each working coil pattern 2512 and each sensing coil pattern 2514 to electrically insulate them from each other. The electrical insulating material may be formed by curing prepreg made of thermosetting resin and glass fiber which are generally used to form printed circuit boards. For example, the applicable thermosetting resin is preferably an epoxy resin series, and specifically, FR-4 may be applied.

The electrical insulating material formed through the prepreg in this way may be disposed between the respective working coil patterns 2512 disposed in a layered structure to electrically insulate them, and may be disposed between the respective sensing coil patterns 2514 to electrically insulate them. Additionally, the configuration may be made such that the electrical insulating material fills portions having no pattern formed therein, such as the working coil pattern 2512, the sensing coil pattern 2514, and the lead coil pattern 2513, thereby forming a layered structure of individual layers.

Therefore, based on the working coil pattern 2512 and the sensing coil pattern 2514, the first coil circuit board module 251 can have a layered structure with a total of 12 layers from the first layer 251a forming the uppermost layer to the twelfth layer 2511 forming the lowermost layer based on the up and down directions.

In this case, the first sensing coil pattern 2514a constituting the sensing coil pattern 2514 may be disposed on the first layer 251a of the first coil circuit board module 251 having the 12-layer structure.

Additionally, a lead pattern 2513 may be disposed on the first layer 251a electrically connecting the first sensing coil pattern 2514a to a signal processing unit 2518 to be described later, or electrically connecting the working coil pattern 2512 disposed on the third to twelfth layers 251c, 251d, 251e, 251f, 251g, 251h, 251i, 251j, 251k, 2511 to a high-power terminal 2516 to which high-frequency power is supplied.

Here, the lead pattern 2513 may be divided into a first lead pattern 2513a electrically connecting the working coil pattern 2512 disposed in the third to twelfth layers 251c, 251d, 251e, 251f, 251g, 251h, 251i, 251j, 251k, 2511 to the high-power terminal 2516, and a second lead pattern 2513b electrically connecting the first sensing coil pattern 2514a to the low-power connector of the signal processing unit 2518 and constituting the container sensing circuit.

Additionally, although not shown in FIG. 7, the temperature sensor 2515 for sensing the temperature of the top plate 21, the high-power terminal 2516 to which high-frequency power is supplied from the inverter circuit board module 283, the signal processing unit 2518 for processing the output signal of the temperature sensor 2515, and a third lead pattern 2513c electrically connecting the temperature sensor 2515 and the signal processing unit 2518 may be further added to the first layer 251a. In this case, the third lead pattern 2513c and the signal processing unit 2518 may form a temperature sensing circuit together with the temperature sensor 2515.

Meanwhile, a second sensing coil pattern 2514b constituting the sensing coil pattern 2514 and a second lead pattern 2513b electrically connecting the second sensing coil pattern 2514b to the low-power connector of the signal processing unit 2518 and constituting the container sensing circuit may be disposed in the second layer 251b of the first coil circuit board module 251.

That is, in order to increase the efficiency and effectiveness of detection for the container, the sensing coil pattern 2514 may be disposed in a manner in which it is divided into the first sensing coil pattern 2514a disposed in the first layer 251a and the second sensing coil pattern 2514b disposed in the second layer 251b.

In this case, as described later, the first sensing coil pattern 2514a and the second sensing coil pattern 2514b may be configured to be connected in series through a sensing coil via hole H_v2 extending through the first layer 251a and the second layer 251b, so that they can function as one sensing coil pattern 2514.

Meanwhile, the second sensing coil pattern 2514b constituting the sensing coil pattern 2514 may be disposed on the second layer 251b of the first coil circuit board module 251.

As described below, the working coil pattern 2512 provided on the cooktop 20 of the cooking apparatus 1 according to an embodiment of the present invention may include a first type pattern 2512a and a second type pattern 2512b in which the progress direction or winding direction of individual pattern strands 2512a-1, 2512b-1 are formed in opposite directions so that a magnetic field can be applied evenly to the container.

As illustrated in FIG. 7, for example, the working coil pattern 2512 may be formed in the third to seventh layers 251c, 251d, 251e, 251f, 251g in such a manner that the first type pattern 2512a configured such that the progress direction or winding direction of the individual pattern strands 2512a-1 becomes the first direction may be disposed.

Additionally, for example, the working coil pattern 2512 may be formed in the eighth to twelfth layers 251h, 251i, 251j, 251k, 2511 in such a manner that the second type pattern 2512b configured such that the progress direction or winding direction of the individual pattern strand 2512b-1 is in the second direction may be disposed.

At this time, as illustrated, the first lead pattern 2513a formed on the first layer 251a, the first type pattern 2512a disposed on the third to seventh layers 251c, 251d, 251e, 251f, 251g, and the second type pattern 2512b disposed on the eighth to twelfth layers 251h, 251i, 251j, 251k, 2511 may be configured to be collectively connected through a working coil via hole H_v1 continuously formed to be penetrated from the first layer 251a to the twelfth layer 2511.

Therefore, a plurality of first type patterns 2512a and a plurality of second type patterns 2512b forming a specific burner of a plurality of burners as described below, may be collectively connected in series through the working coil via hole H_v1.

Meanwhile, although not shown, an electrical insulating material may be additionally formed in the upper side of the first layer 251a and in the lower side of the twelfth layer 2511.

Meanwhile, the layered structure of the first coil circuit board module 251 illustrated in FIG. 7 is merely illustrative.

That is, the layered structure may be modified so that the second sensing coil pattern 2514b is disposed on a layer other than the second layer 251b, such as the sixth layer 251f or seventh layer 251g which is an intermediate layer, or on the twelfth layer 2511 which is the lowermost layer.

Additionally, FIG. 7 illustrates that the first type pattern 2512a is disposed continuously from the third layer 251c to the seventh layer 251g, and the second type pattern 2512b is disposed continuously from the eighth layer 251h to the twelfth layer 2511; however, alternatively, this may be modified such that the first type pattern 2512a and the second type pattern 2512b are alternately and repeatedly disposed.

It is regarded that such a modification naturally falls within the scope of the present invention. However, the present invention will be described below based on, but is not limited to, the layered structure of the first coil circuit board module 251 as illustrated in FIG. 7.

In the first coil circuit board module 251 with such a multi-layer layered structure, the twelfth layer 2511 becoming the lowermost layer may be formed by masking and printing the shape of the working coil pattern 2512 becoming the second type pattern 2512b on the copper thin film, forming a pattern through the removal of the unnecessary portion through etching, and coating an electrical insulating material on the formed pattern.

The thickness of the copper thin film applied in this embodiment may be in the range of 0.13 mm to 0.15 mm, and preferably 0.14 mm.

Therefore, if neither additional surface treatment nor the like is performed during the stacking process, the thickness of the individual pattern in the up and down directions, which is formed through the copper thin film, can be 0.13 mm to 0.15 mm.

Additionally, the thickness of the electrical insulating material applied in this embodiment may be in the range of 0.09 mm to 0.11 mm, and preferably 0.1 mm.

After the twelfth layer 2511 becoming the lowermost layer has been formed in this way, the same process as the formation method of the twelfth layer 2511 may be repeated thereon to form the multi-layer layered structure as shown in FIG. 7.

Therefore, when the formation of the first coil circuit board module 251 has been completed as a total of 12 layers, the thickness of the first coil circuit board module 251 in the up and down directions can be in the range of 2.7 mm to 3.3 mm, and preferably 3 mm.

To a method for manufacturing a multilayer printed circuit board for forming the first coil circuit board module 251 having such a shape and structure, means already known in the art is applicable, and therefore, a description of the specific manufacturing method will be omitted below.

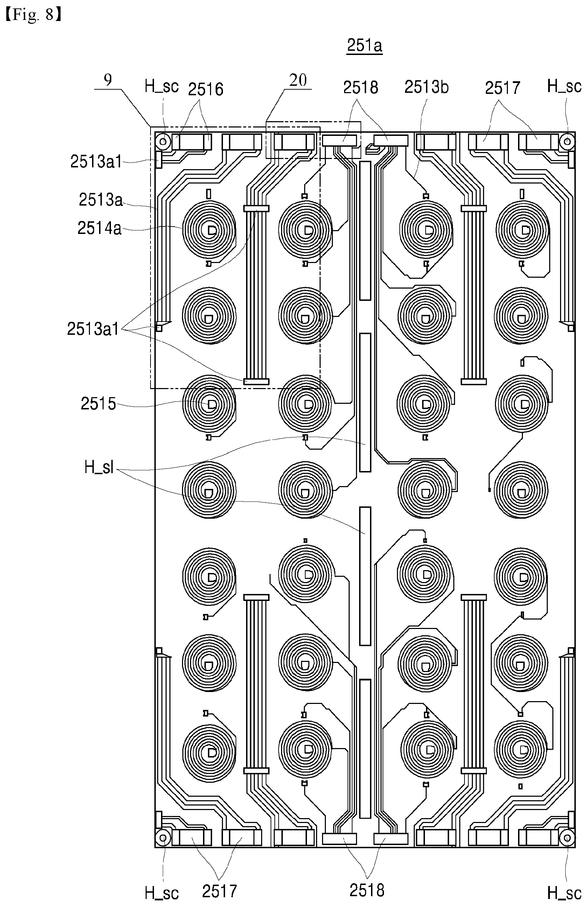

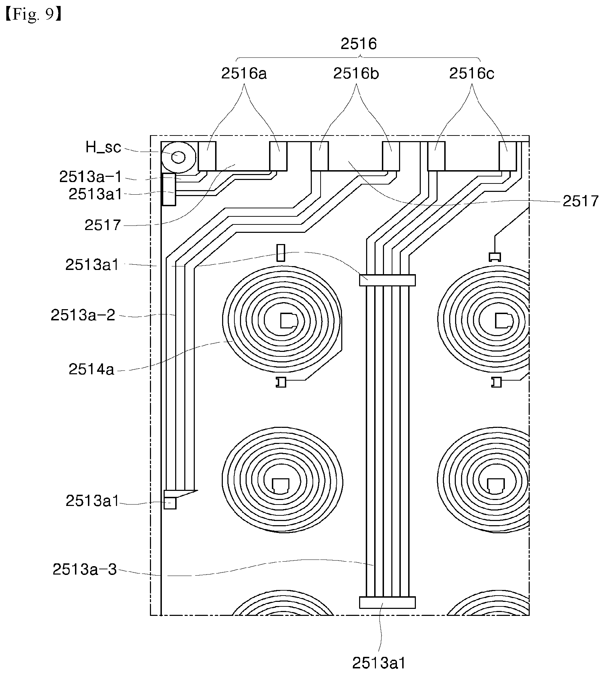

FIGS. 8 and 9 illustrate the planar structures of the first layer 251a and the second layer 251b of the first coil circuit board module 251 having a multi-layer structure, respectively.

In this embodiment, the first coil circuit board module 251 may be configured to have a rectangular shape in which the width in the front and rear directions is greater than the width in the left and right directions based on the state in which it is disposed in the cooktop 20.

In response to this, the first layer 251a becoming the uppermost layer, and the second layer 251b becoming the second-uppermost layer may be configured to have a rectangular shape in which the width in the front and rear directions is greater than the width in the left and right directions.

As described above, a first sensing coil pattern 2514a forming the first layer of the sensing coil patterns 2514 arranged in two layers may be disposed in the first layer 251a, and a second sensing coil pattern 2514b forming the second layer of the sensing coil patterns 2514 arranged in two layers may be disposed in the second layer 251b.

In this case, as shown, the first sensing coil pattern 2514a and the second sensing coil pattern 2514b may be wound in a different shape from the working coil pattern 2512.

That is, the first sensing coil pattern 2514a and the second sensing coil pattern 2514b may be wound in a circular spiral shape. For example, the first sensing coil pattern 2514a and the second sensing coil pattern 2514b may have a number of turns set to 18, and the outer diameter may be in the range of 32 mm to 34 mm, preferably in the range of 33 mm. Additionally, the width of the individual pattern strands constituting the first sensing coil pattern 2514a and the second sensing coil pattern 2514b may be in the range of 0.27 mm to 0.33 mm, preferably 0.3 mm.

As described below, the working coil pattern 2512 is wound in a square spiral shape.

Additionally, the first sensing coil pattern 2514a and the second sensing coil pattern 2514b are disposed so as to allow a region to partially overlap the working coil pattern 2512 based on the up and down directions.

Therefore, due to this overlapping region, there is a possibility that malfunction or detection error of the first sensing coil pattern 2514a and the second sensing coil pattern 2514b may occur.

In this way, by winding the first sensing coil pattern 2514a and the second sensing coil pattern 2514b in the circular spiral shape, interference with the working coil pattern 2512 wound in the square spiral shape can be minimized, and the occurrence possibility of malfunction and detection error of the first sensing coil pattern 2514a and the second sensing coil pattern 2514b can be minimized.

Meanwhile, the first sensing coil pattern 2514a and the second sensing coil pattern 2514b may be wound so that the starting point is not formed in the center of the circular spiral. That is, a first central inner region in which neither the first sensing coil pattern 2514a nor the second sensing coil pattern 2514b is formed may be formed in the center of the circular spiral shape.

In this central inner region of the first sensing coil pattern 2514a, as described below, a temperature sensor 2515 may be mounted. In order to distinguish it from the central inner region formed in the inner side of the working coil pattern 2512 described later, the central inner region of the first sensing coil pattern 2514a will be hereinafter referred to as the first central inner region.

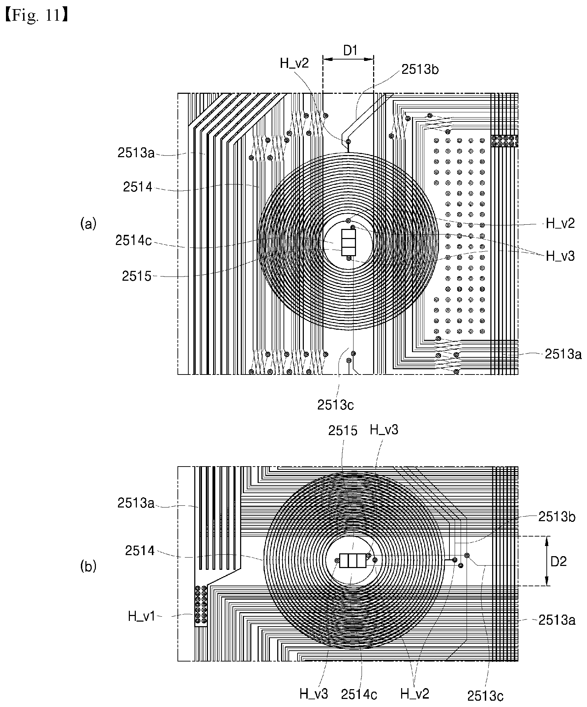

The specific configuration regarding placement of the temperature sensor 2515 will be described later with reference to FIG. 11.

In this embodiment, the first sensing coil pattern 2514a and the second sensing coil pattern 2514b may be provided in plural.

More specifically, a plurality of first sensing coil patterns 2514a and a plurality of second sensing coil patterns 2514b may include some patterns disposed entirely within a specific burner, and patterns disposed to span a pair of adjacent burners 2511.

For example, when the first coil circuit board module 251 includes a total of eight fire holes 2511 in the embodiment as illustrated in FIG. 8, a plurality of first sensing coil patterns 2514a and a plurality of second sensing coil patterns 2514b may be provided in a total of 28 patterns, respectively.

However, this is merely illustrative, and the number of first sensing coil patterns 2514a may be adjusted to be provided differently depending on the size of the individual burner 2511 and the size of the first coil circuit board module 251. The present invention will be described below based on, but is not limited to, an embodiment in which 28 first sensing coil patterns 2514a and second sensing coil patterns 2514b are provided on the first coil circuit board module 251.

The first sensing coil patterns 2514a disposed at different locations may be configured to have substantially the same number of turns, and similarly, the second sensing coil patterns 2514b disposed at different locations may be configured to have the same number of turns.

The sensing coil via hole H_v2 may be formed at the starting point or the ending point of the first sensing coil pattern 2514a, and the sensing coil via hole H_v2 may be connected to the ending point or the starting point of the second sensing coil pattern 2514b. Through this, the first sensing coil pattern 2514a and the second sensing coil pattern 2514b may be connected in series to each other to form one sensing coil pattern 2514.

A starting point or an ending point that is not connected to the sensing coil via hole H_v2 may be electrically connected to the low-power connector of the signal processing unit 2518 provided in the first layer 251a through the second lead pattern 2513b formed in the first layer 251a or the second layer 251b, as illustrated in FIGS. 8 and 9.

Meanwhile, the temperature sensor 2515 to be described later may be electrically connected to the signal processing unit 2518 through the third lead pattern 2513c. As shown in FIG. 9, the third lead pattern 2513c may be formed on the second layer 251b.

In the case where a total of 28 sensing coil patterns 2514 are provided as in the embodiment illustrated in FIG. 8, a total of four signal processing units 2518 may be provided, and a pair of signal processing units 2518 may be formed adjacent to each other at the center of the rear end edge of the first layer 251a, and the other pair of signal processing units 2518 may be disposed adjacent to each other at the center of the front end edge of the first layer 251a.

For example, based on the embodiment illustrated in FIG. 8, among a pair of signal processing units 2518 disposed at the front end edge of the first layer 251a, a left signal processing unit 2518 may be assigned with a group of six sensing coil patterns 2514 among the plurality of sensing coil patterns 2514 disposed to be divided left and right, which are arranged on the left side and rearward from the front end edge of the first layer 251a and temperature sensors 2515 respectively disposed in them, while a right signal processing unit 2518 may be assigned with a group of six sensing coil patterns 2514 among the plurality of sensing coil patterns 2514, which are arranged on the right side and rearward from the front end edge of the first layer 251a and temperature sensors 2515 respectively disposed in them.

To a pair of signal processing units 2518 disposed at the rear end edge of the first layer 251a, a group of sensing coil patterns 2514 and temperature sensors 2515 may be assigned in the same manner.

In this way, by arranging the two pairs of signal processing units 2518 at positions maximally spaced apart along the front and rear directions, the structure of the second lead pattern 2513b connecting the individual sensing coil pattern 2514 to the signal processing unit 2518 and the third lead pattern 2513c connecting the individual temperature sensor 2515 to the signal processing unit 2518 can be effectively simplified, and their lengths can be effectively minimized.

Additionally, a low-power terminal (not shown) for signal transmission and reception for transmitting an electrical signal output to the signal processing unit 2518 to the above-described main circuit board module 281 and a board connector (not shown) mounted on the low-power terminal may be mounted together in each of the front end edge and the rear end edge of the first layer 251a to be adjacent to each of the signal processing units 2518.

Meanwhile, in the first layer 251a, as described later, the first lead pattern 2513a may be formed for transmitting high-frequency power to each of the first type pattern 2512a and the second type pattern 2512b constituting the working coil pattern 2512.

As illustrated, each of the first lead patterns 2513a may be configured to be divided into multiple pattern strands.

Therefore, since the first lead pattern 2513a is formed to be divided into multiple pattern strands, it is possible to minimize the power loss that may occur due to the skin effect when high-frequency power is applied.

Meanwhile, considering the efficiency of power supply, a plurality of pattern strands may be concentrated at one end and the other end of the first lead pattern 2513a to form a common lead terminal 2513a1.

The common lead terminal 2513a1 formed at one end of the first lead pattern 2513a may be connected to a high-power terminal 2516 formed at each of the front end edge and the rear end edge of the first layer 251a.

Meanwhile, the first lead pattern 2513a may extend toward the common lead terminal 2513a1 formed at the other end and disposed in the inside of the first layer 251a from one end.

Meanwhile, in this embodiment, the configuration may be made such that a pair of working coil patterns 2512 disposed adjacent to each other are supplied with high-frequency power through three high-power terminals 2516 and three first lead patterns 2513a.

In other words, if the configuration is made such that the high-frequency power is supplied through a pair of high-power terminals 2516 and a pair of first lead patterns 2513a to each working coil pattern 2512, two pairs of high-power terminals 2516 and two pairs of first lead patterns 2513a must be assigned to one pair of working coil patterns 2512.

The present invention is configured so that high-frequency power is supplied to a pair of working coil patterns 2512 through three high-power terminals 2516 and three first lead patterns 2513a disposed adjacent to each other, and thus, it is possible to minimize the number of high-power terminals 2516 and the number of first lead patterns 2513a, thereby simplifying the circuit configuration.

This will be explained in more detail with reference to FIG. 9.

FIG. 9 is a partial enlarged view of FIG. 8, showing the detailed configuration of a high-power terminal 2516 and a first lead pattern 2513a for supplying power to a pair of working coil patterns 2512 disposed adjacent to the left rear side based on the state shown in FIG. 8.

Based on the shown state, the leftmost high-power terminal 2516 will be referred to as a first high-power terminal 2516a; the middle high-power terminal 2516 will be referred to as a second high-power terminal 2516b; and the rightmost high-power terminal 2516 will be referred to as the third high-power terminal 2516c.

Additionally, the first lead pattern 2513a connected to the first high-power terminal 2516a will be referred to as the first-first lead pattern 2513a-1; the first lead pattern 2513a connected to the second high-power terminal 2516b will be referred to as the first-second lead pattern 2513a-2; and the first lead pattern 2513a connected to the third high-power terminal 2516c will be referred to as the first-third lead pattern 2513a-3.

As illustrated, the first high-power terminal 2516a may be electrically connected through the first-first lead pattern 2513a-1 to the external common terminal of the working coil pattern 2512 among the pair of working coil patterns 2512, which is disposed further rearward.

Hereinafter, the external common terminal of the working coil pattern 2512 will be referred to as the second common terminal 2512a-3, 2512b-3, and the internal common terminal of the working coil pattern 2512 will be referred to as the first common terminal 2512a-2, 2512b-2.

As described below, the first common terminal 2512a-2, 2512b-2 may include the first common terminal 2512a-2 of the first type pattern 2512a and the first common terminal 2512b-2 of the second type pattern 2512b, and the first common terminal 2512a-2 of the first type pattern 2512a and the first common terminal 2512b-2 of the second type pattern 2512b may be connected in series through the working coil via hole H_v1. As described below, the first common terminal 2512a-2 of the first type pattern 2512a and the first common terminal 2512b-2 of the second type pattern 2512b may be formed at positions where they overlap each other in the vertical direction.

Similarly, the second common terminal 2512a-3, 2512b-3 may include the second common terminal 2512a-3 of the first type pattern 2512a and the second common terminal 2512b-3 of the second type pattern 2512b, and the second common terminal 2512a-3 of the first type pattern 2512a and the second common terminal 2512b-3 of the second type pattern 2512b may be connected in series through the working coil via hole H_v1. As described below, the second common terminal 2512a-3 of the first type pattern 2512a and the second common terminal 2512b-3 of the second type pattern 2512b may be formed at positions where they overlap each other in the vertical direction.

In this case, the common lead terminal 2513a1 formed at the other end of the first-first lead pattern 2513a-1 may be formed at a position where it vertically overlaps the second common terminal 2512a-3, 2512b-3 of the working coil pattern 2512 disposed at the rear, and may be connected in series with the second common terminal 2512a-3, 2512b-3 of the working coil pattern 2512 through the working coil via hole H_v1.

Meanwhile, as shown, the second high-power terminal 2516b may be electrically connected through the first-second lead pattern 2513a-2 to the second common terminal 2512a-3, 2512b-3 of the working coil pattern 2512 among the pair of working coil patterns 2512, which is disposed further frontward.

In this case, the common lead terminal 2513a1 formed at the other end of the first-second lead pattern 2513a-2 may be formed at a position where it vertically overlaps the second common terminal 2512a-3, 2512b-3 of the working coil pattern 2512 disposed at the front, and may be connected in series with the second common terminal 2512a-3, 2512b-3 of the working coil pattern 2512 through the working coil via hole H_v1.

Additionally, the third high-power terminal 2516c may be electrically connected through the first-third lead pattern 2513a-3 to the first common terminals 2512a-2, 2512b-2 of a pair of working coil patterns 2512 simultaneously.

That is, as shown, the first-third lead pattern 2513a-3 may have a common lead terminal 2513a1 formed at the other end, and may be additionally provided with a common lead terminal 2513a1 at an intermediate position between one end and the other end.

The common lead terminal 2513a1 formed at the other end of the first-third lead pattern 2513a-3 may be electrically connected through the working coil via hole H_v1 to the first common terminal 2512a-2, 2512b-2 of the working coil pattern 2512 among a pair of working coil patterns 2512, which is disposed at the front.

Additionally, the common lead terminal 2513a1 formed at the intermediate position of the first-third lead pattern 2513a-3 may be electrically connected through the working coil via hole H_v1 to the first common terminal 2512a-2, 2512b-2 of the working coil pattern 2512 among a pair of working coil patterns 2512, which is disposed at the rear.

That is, the first-third lead pattern 2513a-3 may be configured to act as a common lead pattern capable of simultaneously supplying power to the pair of working coil patterns 2512.

Therefore, the driving of the pair of working coil patterns 2512 can be controlled in a manner of supplying power to the first high-power terminal 2516a and the third high-power terminal 2516c and cutting off power to the second high-power terminal 2516b when driving only the rear working coil pattern 2512, and in a manner of supplying power to the second high-power terminal 2516b and the third high-power terminal 2516c and cutting off power to the first high-power terminal 2516a when driving only the front working coil pattern 2512, and in a manner of supplying power to all of the first to third high-power terminals 2516c when driving the pair of working coil patterns 2512 simultaneously.

Meanwhile, based on the state shown in FIGS. 8 and 9, a plurality of edge notches 2517 may be formed at the front end edge and rear end edge of the first layer 251a.

The edge notch 2517 plays a role to provide a coupling space into which a connector (not shown) supplying high-frequency power to the high-power terminal 2516 can be fitted.

As shown, the individual high-power terminal 2516 may be disposed in the form of being divided with the edge notch 2517 interposed therebetween so that the connector can be connected to the high-power terminal 2516 as soon as it is fitted into the edge notch 2517.

In this way, the edge notch 2517 plays a role to provide a space into which the connector described later can be coupled. Therefore, the edge notch 2517 may be referred to as a connector connecting portion, edge portion, cut-away portion, opening portion, or the like, in consideration of its function and shape. To reduce manufacturing costs through the common use of components, connectors having the same shape and structure may be coupled to the respective edge notches 2517. To this end, the respective edge notches 2517 may be formed to have the same shape and size.

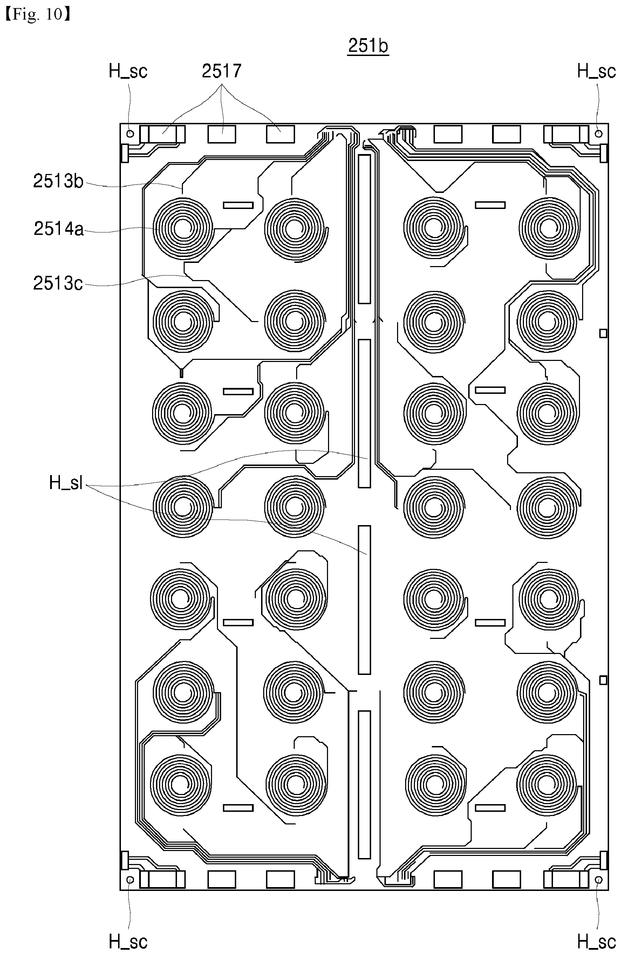

Meanwhile, as shown in FIG. 10, the edge notch 2517 may be formed across from the first layer 251a of the first coil circuit board module 251 through the second layer 251b to the twelfth layer 2511.

Additionally, in the first coil circuit board module 251, a screw hole H_sc may be formed to be penetrated. In the same manner as the edge notch 2517, the screw hole H_sc may be formed to be penetrated from the first layer 251a to the twelfth layer 2511.

A fastening means such as a screw bolt not shown can pass through the screw hole H_sc to be coupled to the above-described substrate supporter 26, and, through this, the first coil circuit board module 251 can be firmly fastened to the above-described substrate supporter 26.

For example, the screw holes H_sc may be disposed in the four corner sides so as not to cause interference with the patterns constituting the first coil circuit board module 251.

Additionally, in the first layer 251a around the screw hole H_sc, a ground terminal may be formed for grounding the first coil circuit board module 251.

Meanwhile, the first coil circuit board module 251 may be provided with the light-transmitting slit hole H_sl formed to be penetrated from the first layer 251a to the twelfth layer 2511.

The above-described light source module 23 may be disposed under the light-transmitting slit hole H _sl, and visible light generated from the light source module 23 can pass through the light-transmitting slit hole H_sl to be irradiated to the bottom surface of the top plate 21. Through this, the indication line L extending linearly can be formed on the top plate 21.

In order to implement the indication line L extending linearly, the light-transmitting slit hole H_sl may be linearly extended corresponding to the shape of the indication line L.

However, as shown in FIG. 8, in order to prevent the rigidity of the first coil circuit board module 251 from rapidly decreasing, the light-transmitting slit hole H_sl may be formed to be divided into multiple pieces, and the divided light-transmitting slit holes H_sl may be arranged linearly.

Additionally, between the divided light-transmitting slit holes H_sl, a connecting part may be provided, which connects them.

The light-transmitting slit hole H_sl may be formed through a process of punching the relevant portion after the stacking process of the circuit board module has been all completed.

Alternatively, for the projection of visible light generated from the light source module 23, the two coil circuit board modules may be disposed to be spaced apart so that a predetermined gap is formed between the two completely separated coil circuit board modules. Through this, a separate punching process or slit hole process with respect to the coil circuit board module can be omitted.

Hereinafter, with reference to FIG. 11, the relative layout position of the sensing coil pattern 2514 and the layout and arrangement structure of the temperature sensor 2515 will be described.

FIG. 11 is an enlarged partial view of a plan view of the shown first coil circuit board module 251 as viewed from above, in which the sensing coil pattern 2514 and the working coil pattern 2512 are shown together for the purpose of explaining and understanding the relative positions. However, in fact, the sensing coil pattern 2514 and the working coil pattern 2512 in this embodiment are disposed in different layers, so the sensing coil pattern 2514 and the working coil pattern 2512 cannot be observed together.

As described above, the individual sensing coil pattern 2514 wound in a circular spiral shape may be disposed so that its region partially overlaps the working coil pattern 2512 wound in a square spiral shape based on the up and down directions.

In this case, some of the plurality of sensing coil patterns 2514 may be disposed as a whole within a single burner 2511 formed through the working coil pattern 2512, and other ones of the plurality of sensing coil patterns 2514 may be disposed to span a pair of adjacent burners 2511.

FIG. 11(a) shows a state in which a sensing coil pattern 2514 is disposed as a whole within a working coil pattern 2512, and FIG. 11(b) shows a state in which a sensing coil pattern 2514 is disposed to span between a pair of adjacent working coil patterns 2512.

First, as described later, the working coil pattern 2512 formed by stacking a plurality of first type patterns 2512a and a plurality of second type patterns 2512b may be wound a plurality of times to have a square spiral shape.

For example, the first type pattern 2512a and the second type pattern 2512b constituting the working coil pattern 2512 may be wound a total of 9 times. That is, it may be wound so that the number of turns is 9 times. Herein, the individual turn of the first type pattern 2512a and the second type pattern 2512b may be defined as meaning a state of being spirally wound one time. That is, the number of turns of 9 may mean the state and the number of times when the first type pattern 2512a and the second type pattern 2512b are spirally wound 9 times.

Additionally, for example, six to five pattern strands 2512a-1, 2512b-1 may be bundled together to form one turn.

In this case, as shown, the distances between the respective turns forming the first type pattern 2512a and the second type pattern 2512b may be maintained approximately constant, but the horizontal direction interval between the third turn and the fourth turn may be formed to be much greater.

Through the horizontal direction distance formed relatively greater in this way, an internal gap D1 can be formed.

Additionally, as shown in FIG. 11(b), an external gap D2 becoming a distance in the front and rear directions similar to the internal gap D1 may be formed between a pair of working coil patterns 2512 disposed adjacently along the front and rear directions based on the state in which the first coil circuit board module 251 is disposed.

The internal gap D1 and the external gap D2 may be formed to have the same size as each other, and, for example, the internal gap D1 and the external gap D2 may be in a range of 3.8 mm to 4.2 mm, and preferably, 4 mm.

As illustrated, the sensing coil pattern 2514 may be disposed so that the center point is located in the internal gap D1 and the external gap D2.

Preferably, in the case where the center point of the sensing coil pattern 2514 is located at the internal gap D1 as in FIG. 11(a), the center point of the sensing coil pattern 2514 may roughly coincide with the middle position between the third turn and the fourth turn.

Additionally, preferably, in the case where the center point of the sensing coil pattern 2514 is located at the external gap D2 as in FIG. 11(b), the center point of the sensing coil pattern 2514 may roughly coincide with the middle position between a pair of adjacently disposed working coil patterns 2512.

Additionally, as described above, each of the first sensing coil pattern 2514a and the second sensing coil pattern 2514b has a region in which no pattern is formed, and through which the first central inner region 2514c can be formed in the inner side of the sensing coil pattern 2514.

As illustrated, the first central inner region 2514c of the sensing coil pattern 2514 may have a disk shape, and the diameter of the inner region of the disk shape may be formed to be equal to or slightly smaller than the size of the internal gap D1 and the external gap D2.

In this way, the internal gap D1 and external gap D2 of the working coil pattern 2512 and the first central inner region 2514c of the sensing coil pattern 2514 can provide a space in which the temperature sensor 2515 can be mounted.

As illustrated, the temperature sensor 2515 for sensing the temperature of the top plate 21 may be mounted in the first central inner region 2514c of each sensing coil pattern 2514 in the first layer 251a. In this case, the size of the internal gap D1 and the external gap D2 and the diameter of the sensing coil pattern 2514 may be formed to be greater than the size of the temperature sensor 2515, i.e., the longitudinal direction width.

Through this, when viewed from the top plate 21, the individual temperature sensor 2515 can be disposed in the first layer 251a so as to belong to the first central inner region 2514c as a position surrounded by each sensing coil pattern 2514.

Additionally, in order to prevent interference with the sensing coil pattern 2514, the temperature sensor 2515 may be disposed, as shown, in a position where the overlap does not occur with respect to the sensing coil pattern 2514 in the up and down directions in the inside of the first central inner region 2514c.

Meanwhile, for example, to the temperature sensor 2515, a surface mounted device (SMD) type sensor in the form of a chip may be applied which is relatively small, easy to mount on the first layer 251a, and has an excellent sensing capability.

The SMD type temperature sensor 2515 may be constructed, for example, with a sensor body, a thermistor disposed in the sensor body, and a pair of electrodes exposed to the upper surface of the first coil circuit board module 251.

This temperature sensor 2515 may be mounted on the upper surface of the first coil circuit board module 251. That is, the temperature sensor 2515 may be attached and fixed to the upper surface of the first coil circuit board module 251.

More specifically, the first coil circuit board module 251 may be provided with a pair of conductive sensor pads (not shown) for attachment of the temperature sensor 2515, and the pair of electrodes of the temperature sensor 2515 may be attached to the pair of sensor pads, respectively.

In this case, the pair of electrodes of the temperature sensor 2515 may be electrically connected and attached to the corresponding pair of pads, respectively, through various physical and chemical methods such as welding, soldering, adhesive, and the like.

However, in the case where the SMD type temperature sensor 2515 is attached and mounted on the upper surface of the first coil circuit board module 251 in this way, there is a very high possibility that it will be affected by the emission of heat generated from the working coil pattern 2512.

In order to minimize the influence by the emission of heat of this working coil pattern 2512, it is necessary to be disposed as far away as possible from the working coil pattern 2512 based on the horizontal direction.

As a position where the influence of this emission of heat can be minimized, a region where the first central inner region 2514c of the sensing coil pattern 2514 and the internal gap D1 overlap, and a region where the first central inner region 2514c of the sensing coil pattern 2514 and the external gap D2 overlap may be selected.

Although FIG. 11 illustrates that the temperature sensor 2515 is disposed at a position where the center point of the temperature sensor 2515 and the center point of the first central inner region 2514c of the sensing coil pattern 2514 roughly coincide, this is merely illustrative, and the influence by the emission of heat of the working coil pattern 2512 can be minimized simply by disposing the temperature sensor 2515 at any position in the region where the first central inner region 2514c of the sensing coil pattern 2514 and the internal gap D1 overlap, and in the region where the first central inner region 2514c of the sensing coil pattern 2514 and the external gap D2 overlap.

Additionally, by configuring such that the temperature sensor 2515 is disposed in a region where the first central inner region 2514c of the sensing coil pattern 2514 and the internal gap D1 overlap, and a region where the first central inner region 2514c of the sensing coil pattern 2514 and the external gap D2 overlap, it is possible to effectively secure a space in which the third lead pattern 2513c electrically connecting the temperature sensor 2515 and the signal processing unit 2518, and a temperature sensor via hole H_v3 through which the temperature sensor 2515 and the third lead pattern 2513c are connected are installed.

In this case, as described above, the SMD type temperature sensor 2515 may have first and second electrodes formed to constitute a pair of electrodes at both ends, respectively, based on the longitudinal direction, and the first layer 251a may be provided with a pair of pads soldered to these first and second electrodes.

As illustrated, in the present embodiment, the direction in which the first electrode and the second electrode provided at both ends of the temperature sensor 2515 are arranged to be spaced apart from each other may be arranged in a direction parallel to the direction of progress of the working coil pattern 2512 arranged adjacent to the temperature sensor 2515 or in a direction intersecting the direction of progress of the working coil pattern 2512.

That is, in the case where the temperature sensor 2515 is disposed in the region of the first gap D1 as shown in FIG. 11(a), the individual pattern strands 2512a-1, 2512b-1 of the working coil patterns 2512 arranged adjacent to both sides of the temperature sensor 2515 progress along the front and rear directions. Accordingly, the direction in which the first electrode and the second electrode of the temperature sensor 2515 disposed in the region of the first gap D1 are arranged to be spaced apart from each other can be the front and rear directions or the left and right directions intersecting the front and rear directions.

Additionally, in the case where the temperature sensor 2515 is disposed in the region of the second gap D2 as shown in FIG. 11(b), the individual pattern strands 2512a-1, 2512b-1 of the working coil patterns 2512 arranged adjacent to both sides of the temperature sensor 2515 progress along the left and right directions. Accordingly, the direction in which the first electrode and the second electrode of the temperature sensor 2515 disposed in the region of the second gap D2 are arranged to be spaced apart from each other can be the left and right directions or the front and rear directions intersecting the left and right directions.

In this case, a pair of pads corresponding to the first electrode and the second electrode of the temperature sensor 2515 disposed in the region of the first gap D1, and the first electrode and the second electrode of the temperature sensor 2515 disposed in the second gap D2, respectively, may be arranged with the same directionality as those.

Through this, the third lead pattern 2513c for transmitting an electrical signal generated from the temperature sensor 2515 to the signal processing unit 2518 can be extended toward the signal processing unit 2518 without interference with the working coil pattern 2512 or in a state in which interference with the working coil pattern 2512 is minimized.

More specifically, the portion of the third lead pattern 2513c, which overlaps the sensing coil pattern 2514 and extends across the sensing coil pattern 2514, may be provided in any one of the third to seventh layers 251c, 251d, 251e, 251f, 251g in which the first type pattern 2512a is formed, or may be provided in any one of the eighth to twelfth layers 251h, 251i, 251j, 251k, 2511 in which the second type pattern 2512b is formed.

For example, in the present embodiment, as illustrated in FIG. 14, the third lead pattern 2513c may be provided in any one of the eighth to twelfth layers 251h, 251i, 251j, 251k, 2511 in which the second type pattern 2512b is formed, and the third lead pattern 2513c formed in any one of the eighth to twelfth layers 251h, 251i, 251j, 251k, 2511 may extend in parallel to the pattern strand 2512b-1 of the second type pattern 2512b in the inside of the first gap D1 and the second gap D2.

Through this, the third lead pattern 2513c can be extended to effectively avoid the working coil pattern 2512.

The remaining portion of the third lead pattern 2513c may be formed, as shown in FIGS. 10 and 11, in the first layer 251a or the second layer 251b in which interference with the working coil pattern 2512 does not occur.

Hereinafter, the detailed configuration of the first type pattern 2512a and the second type pattern 2512b constituting the working coil pattern 2512 will be described with reference to FIGS. 12 to 17.

FIG. 12 illustrates the planar structure of the third layer 251c of the first coil circuit board module 251 having a multi-layer structure.

The configuration of the third layer 251c of the first coil circuit board module 251 described below can be applied equally to the fourth to seventh layers 251d, 251e, 251f, 251g unless otherwise described.

Referring to FIG. 12, the first type pattern 2512a of the working coil pattern 2512 consisting of a total of eight patterns may be arranged in the third layer 251c of the first coil circuit board module 251 so as to form a total of eight burners 2511.

As illustrated, one first type pattern 2512a may be assigned to one burner 2511, and the size of each of the first type patterns 2512a may be formed to be the same so that the size of the individual burner 2511 can be formed to be the same.

In this case, for example, eight burners 2511 may be arranged in a grid shape, and accordingly, the first type patterns 2512a may be arranged in a grid shape.

Therefore, as the first type pattern 2512a is arranged in a grid shape like this while being configured to be wound in a square spiral shape, a heating area can be evenly formed in the inside of the third layer 251c.

Meanwhile, in the case where a plurality of first type patterns 2512a are disposed in a grid shape like this, these second type patterns 2512b may be arranged to be symmetrical.

That is, a plurality of first type patterns 2512a may be arranged to become a left-right symmetrical shape with respect to the light-transmissive slit hole H_sl, which becomes the left-right direction center line of the third layer 251c.

Additionally, a plurality of first type patterns 2512a may be arranged to become a front-rear symmetrical shape with respect to the front-rear direction center line of the third layer 251c. Based on the illustrated embodiment, the front-rear direction center line of the third layer 251c may be defined as an imaginary horizontal line dividing the total of eight burners 2511 into four burners 2511 in the front and four burners 2511 in the rear along the front and rear directions.

In this way, by arranging a plurality of first type patterns 2512a in a symmetrical form, the length of the first lead pattern 2513a for supplying high-frequency power to the individual third layer 251c can be minimized, and the structure of the first lead pattern 2513a can be simplified.

FIG. 13 illustrates the planar structure of the eighth layer 251h of the first coil circuit board module 251 having a multi-layer structure.

The configuration of the eighth layer 251h of the first coil circuit board module 251 described below can be applied equally to the ninth to twelfth layers 251i, 251j, 251k, 2511 unless otherwise described.

As shown in FIG. 13, the second type pattern 2512a of the working coil pattern 2512 consisting of a total of eight patterns may be arranged in the eighth layer 251h of the first coil circuit board module 251 so as to form a total of eight burners 2511.

As illustrated, one second type pattern 2512b may be assigned to one burner 2511, and the size of each of the second type patterns 2512a may be formed to be the same so that the size of the individual burner 2511 can be formed to be the same.

In this case, similarly to the first type pattern 2512a, the second type pattern 2512b may be arranged in a grid shape.

Additionally, similarly to the first type pattern 2512a described above, a plurality of second type patterns 2512b may be arranged to become a left-right symmetrical shape with respect to the light-transmitting slit hole H_sl, and a plurality of second type patterns 2512b may be arranged to become a front-rear symmetrical shape with respect to the front-rear direction center line of the third layer 251c.

FIG. 14 illustrates the first type pattern 2512a and the second type pattern forming one identical burner 2511.

The first type pattern 2512a and the second type pattern 2512b illustrated in FIG. 14 may be arranged in a layered structure along the up and down directions as described above so as to form the same burner 2511 together.

As illustrated in FIG. 14, the first type pattern 2512a and the second type pattern 2512b constituting the working coil pattern 2512 may be wound to have a square spiral shape from the first common terminal 2512a-2, 2512b-2 formed in the inner side toward the second common terminal 2512a-3, 2512b-3 formed in the outer side, as described above.

For example, it may be wound a total of nine times from the first common terminal 2512a-2, 2512b-2 to the second common terminal 2512a-3, 2512b-3. That is, it may be wound so that the number of turns is 9 times.

As illustrated, the first common terminal 2512a-2, 2512b-2 may be formed in an eccentric position from the center of the burner 2511 to the outer side direction. That is, a region in which neither the first type pattern 2512a nor the second type pattern 2512b is formed may be formed in the center of the burner 2511. The purpose of this is to prevent overheating that may occur because heat generated by individual pattern strands 2512a-1, 2512b-1 is concentrated in the center of the burner 2511. Although not shown, a means for preventing overheating on the central side of the burner 2511 may be additionally provided in the form of a via hole in the central side of the burner 2511.

Additionally, as described above, the distance between turn and turn forming each of the first type pattern 2512a and the second type pattern 2512b may be maintained approximately constant, but the internal gap D1 for placement of the temperature sensor 2515 may be formed between the third turn and the fourth turn.

Meanwhile, for example, the first type pattern 2512a may form one turn by six pattern strands 2512a-1 being bundled, and the second type pattern 2512b may form one turn by five pattern strands 2512b-1 being bundled.

The widths of the individual pattern strands 2512a-1, 2512b-1 constituting the first type pattern 2512a and the second type pattern 2512b may be formed identically in a range of 0.27 mm to 0.33 mm, preferably 0.3 mm.

However, although the first type pattern 2512a constitutes one turn with a total of six individual pattern strands 2512a-1, it does not proceed from the first turn to the ninth turn with only six individual pattern strands 2512a-1.

Likewise, although the second type pattern 2512b constitutes one turn with a total of five individual pattern strands 2512b-1, it does not proceed from the first turn to the ninth turn with only five individual pattern strands 2512b-1.

That is, the first type pattern 2512a may be disposed by dividing a plurality of pattern strands 2512a-1 in a manner of stopping any one of the six individual pattern strands 2512a-1 and allowing a new individual pattern strand 2512a-1 to newly proceed when one turn is completed while proceeding from the first turn to the ninth turn.

Similarly, the second type pattern 2512b may be disposed by dividing a plurality of pattern strands 2512b-1 in a manner of stopping any one of the five individual pattern strands 2512b-1 and allowing a new individual pattern strand 2512b-1 to newly proceed when one turn is completed while proceeding from the first turn to the ninth turn.

By configuring the first type pattern 2512a and the second type pattern 2512b to be formed through a plurality of divided individual pattern strands 2512a-1, 2512b-1 in this way, it is possible to achieve the effect of a bundle of wires being bundled similarly to the Litz wire applied to conventional cooktops.

In this case, as illustrated in FIG. 15, the starting point and the ending point of the individual pattern strand 2512a-1 of the first type pattern 2512a arranged to form a new turn may be connected in series through the working coil via holes H_v1 with the starting point and the ending point of the individual pattern strand 2512b-1 of the second type pattern 2512b arranged to form a new turn in the same manner, respectively.

In this case, the working coil via holes H_v1 connecting the starting point and the ending point of the individual pattern strand 2512a-1 of the first type pattern 2512a to the starting point and the ending point of the individual pattern strand 2512b-1 of the second type pattern 2512b may be configured, as illustrated in FIG. 16, to connect together the individual pattern strands 2512a-1, 2512b-1 disposed in the respective layers by penetrating entirely from the third layer 251c to the twelfth layer 2511.

However, as illustrated in FIG. 15, the individual pattern strand 2512a-1 constituting the first type pattern 2512a and the individual pattern strand 2512b-1 constituting the second type pattern 2512b may be configured to extend in opposite directions.

For example, the individual pattern strand 2512a-1 constituting a first type pattern 2512a may extend along a first direction W1, and the individual pattern strand 2512b-1 constituting a second type pattern 2512b may extend along a second direction W2 opposite to the first direction W1.

As illustrated by way of example, the first direction W1 may be clockwise, and the second direction W2 may be counterclockwise.

Therefore, when high-frequency power is supplied through the same working coil via hole H_v1, currents having opposite directionality can flow in the individual pattern strand 2512a-1 of the first type pattern 2512a and the individual pattern strand 2512b-1 of the second type pattern 2512b, which are electrically connected simultaneously to the same working coil via hole H_v1, and magnetic fields having opposite directionality can be formed.

In this way, as magnetic fields of opposite directions are formed in the first type pattern 2512a and the second type pattern 2512b, respectively, it is possible to produce a magnetic field distribution effect similar to the conventional Litz wire configured in a twisted form.

Accordingly, the magnetic fields generated from the first type pattern 2512a and the second type pattern 2512b can be evenly transmitted to a container without being concentrated on a specific portion of the container, thereby improving the heating efficiency and heating effect for the container.

Meanwhile, as illustrated in FIG. 17, in the first common terminal 2512a-2 of the first type pattern 2512a and the first common terminal 2512b-2 of the second type pattern 2512b, a plurality of working coil via holes H_v1 may be formed to minimize loss due to resistance.

These plurality of working coil via holes H_v1 may be formed to be penetrated entirely from the first layer 251a to the twelfth layer 2511 so as to be electrically connected to the first lead pattern 2513a formed in the first layer 251a.

In this way, as the common working coil via hole H_v1 is formed to be penetrated for all the layers, the emission of heat generated by individual working coil pattern 2512 can be effectively released from the first coil circuit board module 251 through the working coil via hole H_v1. That is, the working coil via hole H_v1 can function as a ventilation hole preventing overheating of the first coil circuit board module 251.

Although not shown in FIG. 17, similarly to the first common terminal 2512a-2, 2512b-2, also in the second common terminal 2512a-3 of the first type pattern 2512a and the second common terminal 2512b-3 of the second type pattern 2512b, a plurality of working coil via holes H_v1 may be formed to be penetrated entirely from the first layer 251a to the twelfth layer 2511.

### [Detailed Structure of Temperature Sensor, Temperature Sensing Circuit, and Signal Processing Unit]

Hereinafter, with reference to FIGS. 18 to 23, description will be made regarding the detailed structures of a temperature sensing circuit C1, a temperature sensor 2515 constituting the temperature sensing circuit C1, and a signal processing unit 2518 processing an output signal of the temperature sensor 2515 provided in the cooktop 20 of the cooking apparatus 1 according to an embodiment and another embodiment of the present invention.

As described above, the cooktop 20 of the cooking apparatus 1 according to an embodiment of the present invention may integrally include the temperature sensing circuit C1 for sensing the temperature of the top plate 21, and the temperature sensing circuit C1 may include a plurality of temperature sensors 2515 disposed at different positions, respectively.

As illustrated in FIG. 18, in order to effectively sense the temperature of the top plate 21 at different locations, each of the temperature sensors 2515 may be mounted on the upper surface of the coil circuit board module 251, 252, 253 in a state of being surrounded by the sensing coil pattern 2514.

That is, each temperature sensor 2515 may be mounted in the coil circuit board module 251, 252, 253, and, more particularly, may be disposed on the upper surface of the coil circuit board module 251, 252, 253, which is a position confronting the top plate 21.

In this case, as described above, an SMD type thermistor may be employed as each temperature sensor 2515 to facilitate integration onto the coil circuit board module 251, 252, 253 through the mounting on the coil circuit board module 251, 252, 253.

FIG. 18 shows a state in which the SMD type thermistor applied as the individual temperature sensor 2515 is mounted on the first coil circuit board module 251. Hereinafter, as illustrated by way of example, the description will be made based on the state in which the temperature sensor 2515 is disposed on the first coil circuit board module 251, and the configuration described below can be equally applied to the second coil circuit board module 252 and the third coil circuit board module 253 unless described otherwise.

Referring to FIG. 18, the temperature sensor that is the SMD type temperature sensor 2515 may be constructed by including a sensing chip 2515a generating an output signal containing information related to a sensed temperature, a sensor body 2515b accommodating the sensing chip 2515a therein, and a first electrode 2515c and a second electrode 2515d spaced apart from each other with the sensor body 2515b interposed therebetween and electrically connected to the sensing chip 2515a, respectively.

FIG. 18 illustrates an SMD type thermistor having a configuration in which a sensing chip 2515a is disposed in the inside of a sensor body 2515b having a square pillar shape, and a first electrode 2515c and a second electrode 2515d are disposed at both ends of the sensor body 2515b, respectively, based on the longitudinal direction of the temperature sensor 2515.

In this case, the first electrode 2515c and the second electrode 2515d may be provided in the form of a disk or a cylinder formed protrudingly from the longitudinal both ends of the sensor body 2515b along a direction away from the sensor body 2515b. The first electrode 2515c and the second electrode 2515d may be directly soldered to be connected to the sensor pads, respectively, formed on the upper surface 251t of the first coil circuit board module 251.

The third lead pattern 2513c constituting the temperature sensing circuit C1 as described above may be connected to the sensor pad, and the output signal of the first electrode 2515c or the second electrode 2515d may be transmitted to the signal processing unit 2518 through the sensor pad and the third lead pattern 2513c.

However, the SMD type thermistor provided in this way as the temperature sensor 2515 in the present invention can be configured in various shapes and formats as is already known in the art, and be applied to the present invention. The present invention will be described below based on, but is not limited to, the configuration of the SMD type thermistor shown illustratively.

The temperature sensor 2515 may be the SMD type thermistor having a microchip shape so as to allow easy mounting on the upper surface 251t of the first coil circuit board module 251 as described above and easy placement in the central inner region 2514c of the sensing coil pattern 2514.

For example, as the temperature sensor 2515, an SMD type thermistor may be selected which has a longitudinal direction width of approximately 3.2 mm from the end surface of the first electrode 2515c to the end surface of the second electrode 2515d and a transverse direction width and up-down direction width of approximately 1.65 mm.

In particular, the sensor body 2515b of the temperature sensor 2515 acting as a temperature sensing surface may have a size such that the longitudinal direction width Ws_1 is approximately 2.3 mm and the transverse direction width Ws_t is approximately 1.65 mm.

Meanwhile, as illustrated in FIG. 18, in the case where the temperature sensor 2515 is mounted on the upper surface 251t of the first coil circuit board module 251, a part of the outer surface of the sensor body 2515b acting as the temperature sensing surface, i.e., the bottom surface based on the illustrated state, may be disposed to be in direct contact with the upper surface 251t of the first coil circuit board module 251.

In this case, as described above, the thermal insulating material 291 may be disposed between the first coil circuit board module 251 and the top plate 21.

As shown, in order to easily sense the temperature of the top plate 21, an opening may be formed in the thermal insulating material 291 to prevent interference with the temperature sensor 2515.

Additionally, the top surface of the sensor body 2515b of the temperature sensor 2515 may directly contact the bottom surface 21b of the top plate 21 to sense the temperature of the top plate 21, or may indirectly sense the temperature of the bottom surface 21b of the top plate 21 through an electrical insulating material 292 as shown.

In this way, the individual temperature sensor 2515 may generate an electrical output signal containing data regarding the temperature of the top plate 21 sensed through the sensing chip 2515a, and output it through the first electrode 2515c or the second electrode 2515d. The output signal of the first electrode 2515c or the second electrode 2515d may be transmitted to the main circuit board module 281 or the inverter circuit board module 283 via the third lead pattern 2513c.

However, since the individual temperature sensor 2515 is configured with an SMD type thermistor as described above, the electrical output signal of the individual temperature sensor 2515 may become a resistance-based data signal determined according to the temperature of the top plate 21.

As described above, the output signal of the individual temperature sensor 2515 becomes an unprocessed or unconverted resistance-based data signal, and the main circuit board module 281 becomes a state where it cannot directly read that resistance-based data signal.

Therefore, between the individual temperature sensor 2515 and the main circuit board module 281, the signal processing unit 2518 needs to be provided to convert the output signal of the individual temperature sensor 2515 into a temperature-based data signal.

The cooktop 20 of the cooking apparatus 1 according to an embodiment of the present invention may be configured such that the signal processing unit 2518 for converting the output signal of the individual temperature sensor 2515 is integrally provided in the first coil circuit board module 251 rather than in the main circuit board module 281 or the inverter circuit board module 283.

Since the signal processing unit 2518 is integrally provided in the first coil circuit board module 251, the signal processing unit 2518 can constitute the temperature sensing circuit C1 together with a plurality of temperature sensors 2515.

The signal processing unit 2518 plays a role to process output signals transmitted from a plurality of temperature sensors 2515 in batches, and to finally transmit the processed signals to the main circuit board module 281 or the inverter circuit board module 283.

Therefore, it may be desirable for the signal processing unit 2518 to be disposed at a position where the occurrence of interference can be prevented to the maximum extent with respect to the working coil pattern 2512 constituting the burner 2511 and the sensing coil pattern 2514 constituting the container sensing circuit C2.

The position where this interference can be avoided may be the edge portion becoming the border of the first coil circuit board module 251, particularly the position close to the front end edge and the rear end edge where the high-power terminal 2516 is formed and where it is easy to avoid the working coil pattern 2512.

FIG. 19 shows a cross-sectional view of the rear end edge 251s2 side of the first coil circuit board module 251 taken along the vertical direction, and FIG. 20 shows a plan view of the rear end edge 251s2 side of the first coil circuit board module 251 when viewed from above.

First, referring to FIG. 19, the substrate supporter 26 may be disposed under the first coil circuit board module 251, and the first coil circuit board module 251 may be seated on the top surface 261 of the substrate supporter 26 to be supported by the substrate supporter 26.

As described above, the main circuit board module 281, the SMPS circuit board module 282, the inverter circuit board module 283, the resonant circuit board module 284, the EMI filter module 285, the blower fan module 286, and the light source module 23, which constitute the electronic component 28, may be fixed to the bottom surface 262 in the inside of the board supporter 26.

In this case, the working coil pattern 2512 constituting the burner 2511 needs to be disposed to be close to the top plate 21 to the maximum extent so that the efficiency of the emission of heat with resepct to the container can be maintained at its maximum level.

Based on the illustrated embodiment, the top plate 21 may have a thickness of approximately 4 mm in the up and down directions.

Additionally, as described above, in the case where the working coil pattern 2512 is arranged in ten layered structures along the up and down directions and the first coil circuit board module 251 has a total of twelve layered structures, the first coil circuit board module 251 may have a thickness of approximately 3 mm in the up and down directions.

In this regard, in order to achieve the maximum efficiency of the emission of heat of the working coil pattern 2512, the gap GH1 formed between the upper surface 251t of the first coil circuit board module 251 and the bottom surface 21b of the top plate 21 in the up and down directions may be set in a range between 2.7 and 3.3 mm (inclusive), and preferably may be set to be 3 mm.

As such, since the gap GH1 between the upper surface 251t of the first coil circuit board module 251 and the bottom surface 21b of the top plate 21 in the up and down directions is formed to be quite narrow, a situation may occur in which there is insufficient available space for the placement of the signal processing unit 2518.

Particularly, when considering the height of the low-power connector 2518g constituting the signal processing unit 2518 and the size of the flat cable (not shown) connected to the low-power connector 2518g, as described later, it may be very difficult to dispose the signal processing unit 2518 between the upper surface 251t of the first coil circuit board module 251 and the bottom surface 21b of the top plate 21.

Taking into consideration this gap GH1 between the upper surface 251t of the first coil circuit board module 251 and the bottom surface 21b of the top plate 21 in the up and down directions, it is preferable that the signal processing unit 2518 be disposed on the lower surface 251v of the first coil circuit board module 251 adjacent to the rear end edge 251s2.

However, the present invention is not limited to this, and as described later, the configuration can be made such that the remaining parts of the signal processing unit 2518 except for the low-power connector 2518g is disposed on the upper surface 251t of the first coil circuit board module 251.

Meanwhile, referring to FIG. 20, a plurality of high-power terminal patterns 2516 may be integrally formed as a terminal part for supplying high-frequency power to the working coil pattern 2512 on the first coil circuit board module 251 together with the working coil pattern 2512.

As illustrated, these plurality of high-power terminal patterns 2516 may be formed to be close to the front end edge and the rear end edge 251s2 of the first coil circuit board module 251, and may be arranged along the extension direction of each of the front end edge and the rear end edge 251s2.

In the embodiment, the high-power terminal pattern 2516 is illustrated as being formed on the upper surface 251t of the first coil circuit board module 251, but, unlike this, the configuration may be made differently depending on an embodiment such that the high-power terminal pattern 2516 may be formed on the lower surface 251v of the first coil circuit board module 251, or may be formed on each of the upper surface 251t and the lower surface 251v of the first coil circuit board module 251.

Meanwhile, the configuration is made such that the high-frequency power having an effective value of approximately 20 A or more is applied to the high-power terminal pattern 2516. Therefore, it is virtually impossible to apply to the high-power terminal pattern 2516 a connector having a simple fitting method, such as a conventional board connector.

Accordingly, the configuration may be made such that high-frequency power is transmitted to the high-power terminal pattern 2516 through a high-power connector 254 whose one side is connected to the high-power terminal pattern 2516 of the first coil circuit board module 251 and whose other side is electrically connected to the inverter of the inverter circuit board module 283 through a power cable. As shown, the substrate supporter 26 may be provided with a plurality of first communication holes 263 formed to be penetrated along the top surface 261 and the bottom surface 262 so that the lower end of the high-power connector 254 connected with a power cable can be inserted and passed through them. Additionally, in FIG. 20, a second communication hole 264 disposed adjacent to the first communication hole 263 and having a larger open area than the first communication hole 263 may be additionally formed, and the second communication hole 264 may function so as to allow the low-power connector 2518g described later to be directly inserted therein or allow a flat cable connected to the low-power connector 2518g to pass therethrough.

In this regard, as shown, the signal processing unit 2518 of the cooktop 20 of the cooking apparatus 1 according to an embodiment of the present invention may be configured to be disposed in a dummy region formed in the lateral direction of the high-power terminal pattern 2516 to which the high-power connector 254 is connected in this way.

The first coil circuit board module 251 may have dummy regions formed in a plurality of locations, in which neither metal nor conductor, such as a pattern or a via hole, is disposed or filled in the overall course from the upper surface 251t to the lower surface 251v along the up and down directions.

Therefore, due to the non-formation of a pattern, a via hole or the like, these dummy regions can become a region filled only with electrical insulating material formed of a thermosetting resin containing a glass fiber.

Particularly, for example, as in the embodiment illustrated in FIG. 20, a dummy region among the plurality of dummy regions, which is formed between the high-power terminal pattern 2516 and the low-power connector 2518g described later, and which is adjacent to the rear end edge 251s2 of the first coil circuit board module 251, can be selected as the installation region A1 where the signal processing unit 2518 according to an embodiment of the present invention is placed because it can become a region where mutual interference and influence from the working coil pattern 2512 and the sensing coil pattern 2514 are minimized.

In the installation region A1, as shown in FIGS. 21 and 22, a multiplexer 2518a, a pull-up/pull-down element 2518b, a signal amplification element 2518c, a microcomputer 2518f, and a connection pattern 2518d electrically connecting them, which constitute the signal processing unit 2518, may be disposed.

Therefore, in this way, by forming the installation region A1 in a position where it does not overlap in the up and down directions the working coil pattern 2512, the sensing coil pattern 2514, the lead pattern 2513, and other several via holes, which constitute the first coil circuit board module 251, and by disposing the signal processing unit 2518 in the installation region A1, the signal processing unit 2518 can be disposed in a state where interference and influence with respect to the components of the first coil circuit board module 251 are minimized.

Additionally, by configuring the installation region A1 to be defined in the dummy region, the availability for the region of the first coil circuit board module 251 can be improved.

Furthermore, as the signal processing unit 2518 is disposed, there can be effects in that the rigidity of the dummy region formed only with electrical insulating material can be reinforced, and in that the proportion of the electrical insulating material can be reduced, thereby reducing the manufacturing cost.

FIG. 22 shows an illustrative detailed displacement structure of the signal processing unit 2518 constituting the temperature sensing circuit C1 according to an embodiment of the present invention.

Referring to FIGS. 21 and 22, the multiplexer of the signal processing unit 2518 constituting the temperature sensing circuit C1 may be disposed in the installation region A1.

As described above, the upper surface 251t of the first coil circuit board module 251 may be provided with a plurality of temperature sensors 2515 disposed at different positions.

For example, in the case where a total of 14 temperature sensors 2515 are provided in the first coil circuit board module 251 like the embodiment shown in FIG. 8, a common input via hole H_v311 functioning as the initial input terminal for 7 temperature sensors 2515 based on the first coil circuit board module 251 and a first via hole group H_v31 functioning as the final output terminal may be disposed and arranged adjacent to the rear end edge 251s2 of the first coil circuit board module 251. The via holes arranged in two rows together with the first via hole group H_v31 may become a first via hole group H_v21 of the sensing coil via holes H_v2 constituting the container sensing circuit C2 and functioning as the initial input terminal and output terminal of the seven sensing coil patterns 2514 based on the first coil circuit board module 251. Additionally, the via holes additionally disposed in the right side of these first via hole groups H_v21, H_v31 correspond to second via hole groups H_v22, H_v32 constituting the temperature sensing circuit C1 and the container sensing circuit C2 and serving as an intermediate terminal.

That is, seven temperature sensors 2515 may be commonly connected to the single common input via hole H_v311, and the output signals of the seven temperature sensors 2515 may be finally output through seven first via hole groups H_v31 individually allocated thereto, respectively.

The multiplexer 2518a is electrically connected to the first via hole group H_v31 of seven temperature sensors 2515 and performs a function of sequentially outputting a plurality of output signals by selecting an output signal of any one temperature sensor of the seven temperature sensors. To this end, the multiplexer 2518a of the present invention, similar to a multiplexer commonly used in the art, may be provided with a microchip-type device having at least 7 switching devices therein and may be mounted in the installation region A1.

In accordance with the number of temperature sensors 2515, the input terminal of the multiplexer 2518a may be provided with at least seven terminals, and the seven terminals may be electrically connected to individual via holes of the first via hole group H_v31 consisting of seven via holes through the connection pattern 2518d. Additionally, four control input terminals to which the control signal of the microcomputer 2518f described later is input, at least one ground terminal, and an operating power terminal may be further added to the input terminal of the multiplexer 2518a.

As shown, the connection pattern 2518d may be configured, for example, with nine connection patterns so that individual via holes can be electrically connected to individual input terminals of the multiplexer 2518a, respectively, and so that the control input terminal, the ground terminal, and the operating power terminal can be connected thereto.

When a control signal for selecting an internal switch element is input from the main circuit board module 281 to the microcomputer 2518f, the selected switch element can be converted from the turn-off state to the turn-on state, so that the output signal of the selected temperature sensor 2515 can be transmitted to the main circuit board module 281 or the inverter circuit board module 283 by way of the microcomputer 2518f described below through a common output pattern 2518e, thereby enabling the temperature of the top plate 21 to be sensed at the position where that temperature sensor 2515 is disposed.

As shown, the common output pattern 2518e may be electrically connected to a common output via hole H_v312, and the common output via hole H_v312 may be electrically connected to a main circuit board module 281 by being connected to a connecting pin (not shown) of the low-power connector 2518g.

In this way, since the output signals of a total of seven temperature sensors 2515 are transmitted through the single common output pattern 2518e, the wiring and pattern structure in the installation region A1 can be significantly simplified.

Meanwhile, as the multiplexer 2518a is disposed in the installation region A1 of the first coil circuit board module 251, the multiplexer 2518a can be mounted on the lower surface 251v of the first coil circuit board module 251 as shown.

Additionally, as the installation regionA1 is formed in the dummy region, the multiplexer 2518a can be disposed in a state where there is no overlap with the working coil pattern 2512 and the sensing coil pattern 2514 based on the up and down directions.

Meanwhile, as the multiplexer is configured with a plurality of switching elements in this manner, the signal processing unit 2518 constituting the temperature sensing circuit C1 may further include a pull-up element or a pull-down element as a means with which the switching element prevents the output signal from floating.

Although FIG. 22 illustrates, by way of example, the configuration in which the pull-up/pull-down element 2518b is provided as one body with the multiplexer 2518a, it is also possible to apply a configuration in which the pull-up/pull-down element 2518b is provided separately from the multiplexer 2518a and is connected to the output terminal of the multiplexer 2518a through the common output pattern 2518e. The present invention will be described below based on, but is not limited to, the configuration as shown in which the pull-up/pull-down element 2518b is integrally provided in the multiplexer 2518a.

Meanwhile, as described above, since the temperature sensor 2515 is provided as an SMD type thermistor having a very small size, the output signal of the individual temperature sensor 2515 inevitably has a very small size.

Additionally, the multiplexer 2518a performs the only function of selecting and outputting only the output signal of the temperature sensor 2515 selected through the turn-on of the switching element, and does not have the function of amplifying the output signal of the temperature sensor 2515.

As a means for amplifying the output signal of the temperature sensor 2515 having such a very small size to facilitate identification, the signal processing unit 2518 constituting the temperature sensing circuit C1 may further include the signal amplification element 2518c.

Although there is no limitation on the kind of applicable signal amplification element, an OP-AMP type signal amplification element may be preferable which is easy to mount and has a small size.

As shown, the signal amplification element 2518c may be provided alone or may be configured to be integrally provided in the microcomputer 2518f described later. FIG. 22 and the following drawing show a configuration in which the signal amplification element 2518c is integrally provided in the microcomputer 2518f. The present invention will be described below based on, but is not limited to, an embodiment in which the signal amplification element 2518c is integrally provided in the microcomputer 2518f.

Meanwhile, the signal processing unit 2518 of the cooktop 20 of the cooking apparatus 1 according to an embodiment of the present invention may further include the microcomputer 2518f converting the output signal of the temperature sensor 2515 and outputting the converted signal.

As described above, the output signal of the temperature sensor 2515 becomes a resistance-based data signal determined and changed according to the temperature of the top plate 21.

Accordingly, the main controller of the main circuit board module 281 is in a state in which it cannot directly read this resistance-based data signal, and needs to be provided with a means for converting a resistance-based data signal into a temperature-based data signal so that it can determine the temperature of the top plate 21.

The present invention may be configured so that the microcomputer 2518f which can convert the output signal of the temperature sensor 2515 into the temperature-based data signal and transmit it to the main circuit board module 281 as shown in FIG. 22 so that the inverter circuit board module 283 or the main controller of the main circuit board module 281 can directly determine the temperature of the top plate 21 can be further disposed in the installation region A1 of the first coil circuit board module 251 as a part of the temperature sensing circuit C1.

However, a resistance-temperature conversion table may be stored in the microcomputer 2518f, which thereby can convert resistance-based data into temperature-based data, and communicate it.

Additionally, the microcomputer 2518f can also perform a function of converting the output signal of the temperature sensor 2515, which is an analog signal, into a digital signal and communicating it to the main circuit board module 281.

For this purpose, the terminal of the microcomputer 2518f may be electrically connected to the communication via hole H _can through the common output pattern 2518e. Additionally, the terminal of the microcomputer 2518f may be electrically connected to the ground via hole H_g and the operating power via hole H_vcc through the connection pattern 2518d.

Similarly to the multiplexer 2518a, the signal amplification element 2518c, and the like which constitute the signal processing unit 2518, the microcomputer 2518f is disposed in the installation region A1 of the first coil circuit board module 251, so that the microcomputer 2518f can be mounted on the lower surface 251v of the first coil circuit board module 251 as shown.

Likewise, as the installation region A1 is formed in the dummy region, the microcomputer 2518f can be disposed in a state where there is no overlap with the working coil pattern 2512 and the sensing coil pattern 2514 based on the up and down directions.

FIG. 23 shows the placement configuration of the signal processing unit 2518 according to another embodiment of the present invention.

In the case of the above-described embodiment, the configuration is made such that the multiplexer 2518a and the microcomputer 2518f constituting the signal processing unit 2518 are disposed in the installation region A1 formed at the front end edge or the rear end edge 251s2 of the first coil circuit board module 251, and is made such that the multiplexer 2518a and the microcomputer 2518f are electrically connected to the operating power via hole H_vcc, the ground via hole H_g, and the communication via hole H _can through the separate connection pattern 2518d and the common output pattern 2518e.

Unlike this, in the case of the embodiment illustrated in FIG. 23, the configuration may be made such that the multiplexer 2518a and the microcomputer 2518f are directly connected to the third lead pattern 2513c formed in the first layer 251a of the first coil circuit board module 251 and extending across the internal region of the burner 2511.

In this way, since the multiplexer 2518a and the microcomputer 2518f are configured to be disposed in the internal region of the burner 2511 rather than the installation region A1 of the first coil circuit board module 251, the connection pattern 2518d for electrically connecting the multiplexer 2518a and the microcomputer 2518f to the operating power via hole H_vcc, the ground via hole H_g, and the communication via hole H_can can be omitted, and thereby, there is an advantage in that the configuration of the temperature sensing circuit C1 can be simplified.

Meanwhile, as shown, in order for the multiplexer 2518a and the microcomputer 2518f to be directly connected to the third lead pattern 2513c, the third lead pattern 2513c may be partially omitted and formed in a disconnected state in the region where the multiplexer 2518a is mounted and the region where the microcomputer 2518f is mounted, that is, in the regions where the multiplexer 2518a and the microcomputer 2518f overlap it.

Although not shown, the ends of the third lead pattern 2513c may be electrically connected to the second via hole group H_v32 among the temperature sensor via holes H_v3, respectively.

In this case, although not shown, as described above, the second via hole group H_v32 may be electrically connected to the operating power VCC via hole H_vcc, the ground via hole H_g, and the communication via hole H_can through a pattern disposed in a layer other than the first layer 251a where the third lead pattern 2513c is formed.

Although the present invention has been described with reference to the drawings as examples, it is obvious that the present invention is not limited to the embodiments and drawings disclosed in this specification, and that various modifications can be made by those skilled in the art without departing from the scope of the technical idea of the present invention. Additionally, even if the effects according to the configuration of the present invention were not explicitly written while describing the embodiments of the present invention, it is natural that the effects that can be predicted by the configuration should also be recognized.

## Claims

1. A cooking apparatus comprising:
a top plate for a container to be seated on; and
a coil circuit board module disposed under the top plate, and having a working coil pattern causing the container to emit heat by generating a magnetic field when high-frequency power is applied thereto,
wherein the coil circuit board module includes a temperature sensing circuit sensing a temperature of the top plate, and
wherein the temperature sensing circuit is formed integrally in the coil circuit board module.

2. The cooking apparatus of claim 1, wherein the temperature sensing circuit includes a plurality of temperature sensors mounted on the coil circuit board module.

3. The cooking apparatus of claim 2, wherein the plurality of temperature sensors are each mounted on an upper surface of the coil circuit board module facing the top plate.

4. The cooking apparatus of claim 2, wherein the temperature sensing circuit further includes a multiplexer electrically connected to the plurality of temperature sensors and selecting and outputting an output signal of any one temperature sensor of the plurality of temperature sensors.

5. The cooking apparatus of claim 4, wherein the multiplexer is mounted on an upper surface or a lower surface of the coil circuit board module.

6. The cooking apparatus of claim 4, wherein the multiplexer is disposed in a position where the multiplexer does not overlap the working coil pattern based on up and down directions.

7. The cooking apparatus of claim 4, wherein the temperature sensing circuit further includes a pull-up element or a pull-down element connected to an output terminal of the multiplexer.

8. The cooking apparatus of claim 7, wherein the pull-up element or the pull-down element is integrally provided in the multiplexer.

9. The cooking apparatus of claim 4, wherein the temperature sensing circuit further includes a microcomputer connected to an output terminal of the multiplexer and converting the selected output signal of the temperature sensor.

10. The cooking apparatus of claim 9, wherein the selected output signal of the temperature sensor becomes a resistance-based data signal determined according to the temperature of the top plate, and
wherein the microcomputer converts the resistance-based data into a temperature-based data signal.

11. The cooking apparatus of claim 9, wherein the microcomputer is mounted on an upper surface or a lower surface of the coil circuit board module.

12. The cooking apparatus of claim 9, wherein the microcomputer is disposed in a position where the microcomputer does not overlap the working coil pattern based on up and down directions.

13. The cooking apparatus of claim 9, wherein the temperature sensing circuit further includes a signal amplification element connected to the output terminal of the multiplexer.

14. The cooking apparatus of claim of claim 13, wherein the signal amplification element is integrally provided in the microcomputer.

15. The cooking apparatus of claim 2, wherein the coil circuit board module further includes a container sensing circuit sensing whether the container is seated, and
wherein the container sensing circuit is formed integrally in the coil circuit board module.

16. The cooking apparatus of claim of claim 15, wherein the container sensing circuit includes a sensing coil pattern formed to be wound spirally so as to sense whether the container is seated, and
wherein the temperature sensor is disposed on the coil circuit board module in a state where the temperature sensor is surrounded by the sensing coil pattern when viewed from the top plate.

17. The cooking apparatus of claim 15, further comprising:
a main circuit board module determining whether to supply high-frequency power to the working coil pattern,
wherein the coil circuit board module includes a low-power connector connecting the temperature sensing circuit and the container sensing circuit to the main circuit board module side in an integrating manner.

18. The cooking apparatus of claim 17, wherein the low-power connector is fixed to an lower surface of the coil circuit board module.
